# EUROPEAN PATENT APPLICATION

(11) **EP 4 836 484 A1**
(43) Date of publication of application: **04.11.2026**
(21) Application number: 23962929.8
(22) Date of filing: 29.12.2023
(51) Int. Cl.: H04W 16/28

(54) **COMMUNICATION METHOD, TERMINAL, NETWORK DEVICE, AND COMMUNICATION SYSTEM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/143623
(87) International publication number: WO 2025/138255

(57) **Abstract**

The present disclosure relates to a communication method, a terminal, a network device, and a communication system. The communication method comprises: in response to satisfying an event-corresponding condition, a terminal sends first information to a network device, the first information being used for determining a first QCL parameter. By means of the embodiments of the present disclosure, event-triggered reporting of beam reports can be achieved, thereby reducing signaling overhead.

## Description

### TECHNICAL FIELD

The present disclosure relates to the communication technical field, and in particular to a communication method, a terminal, a network device and a communication system.

### BACKGROUND

In New Radio (NR), especially in operation frequency range 2, beam-based transmission and reception are required to ensure coverage.

### SUMMARY

How to implement event-triggered beam reporting and achieve reduced signaling overhead and latency is a problem that needs to be solved.

Embodiments of the present disclosure provide a communication method, a terminal, a network device, and a communication system.

According to a first aspect an embodiment of the present disclosure, a communication method is provided. The method includes: in response to a condition corresponding to an event being satisfied, sending, by a terminal, first information to a network device, where the first information is used to determine a first QCL parameter.

According to a second aspect of an embodiment of the present disclosure, a communication method is provided. The method includes: receiving, by a network device, first information sent from a terminal in a case that a condition corresponding to an event is satisfied, where the first information is used to determine a first QCL parameter.

According to a third aspect of an embodiment of the present disclosure, a communication method is provided. The method includes: in response to a condition corresponding to an event being satisfied, sending, by a terminal, first information to a network device, where the first information is used to determine a first QCL parameter; and receiving, by the network device, the first information.

According to a fourth aspect of an embodiment of the present disclosure, a terminal is provided. The terminal includes: a transceiving module configured to send first information to a network device in response to a condition corresponding to an event being satisfied, where the first information is used to determine a first QCL parameter.

According to a fifth aspect of an embodiment of the present disclosure, a network device is provided. The network device includes: a transceiving module configured to receive first information sent from a terminal in a case that a condition corresponding to an event is satisfied, where the first information is used to determine a first QCL parameter.

According to a sixth aspect of an embodiment of the present disclosure, a terminal is provided. The terminal includes: one or more processors; where the processors are configured to execute the communication method of the first aspect.

According to a seventh aspect of an embodiment of the present disclosure, a network device is provided. The network device includes: one or more processors; wherein the processors are configured to perform the communication method of the second aspect.

According to an eighth aspect of an embodiment of the present disclosure, a communication system is provided. The system includes a terminal and a network device, where the terminal is configured to implement the communication method of the first aspect, and the network device is configured to implement the communication method of the second aspect.

According to a ninth aspect of an embodiment of the present disclosure, a storage medium is provided. The storage medium stores instructions, wherein when the instructions are run on a communication device, the communication device is cause to perform the communication method of either the first aspect or the second aspect.

Through the embodiments of the present disclosure, reporting of an event-triggered beam report can be implemented, thereby reducing signaling overhead.

### BRIEF DESCRIPTION OF THE DRAWINGS

To more clearly illustrate the technical solutions in the embodiments of the present disclosure, the accompanying drawings required for the description of the embodiments are introduced below. The following drawings are only some embodiments of the present disclosure and do not impose specific limitations on the protection scope of the present disclosure.
FIG. 1 is a schematic diagram of the architecture of a communication system according to an embodiment of the present disclosure.
FIG. 2 is a schematic diagram showing interactions of a communication method according to an embodiment of the present disclosure.
FIG. 3 is a schematic flowchart of a communication method according to an embodiment of the present disclosure.
FIG. 4A is a schematic flowchart of a communication method according to an embodiment of the present disclosure.
FIG. 4B is a schematic flowchart of a communication method according to an embodiment of the present disclosure.
FIG. 5 is a schematic diagram showing interactions of a communication method according to an embodiment of the present disclosure.
FIG. 6A is a schematic diagram of the structure of a terminal provided in an embodiment of the present disclosure.
FIG. 6B is a schematic diagram of the structure of a network device provided in an embodiment of the present disclosure.
FIG. 7A is a schematic diagram of the structure of a communication device provided in an embodiment of the present disclosure.
FIG. 7B is a schematic diagram of the structure of a chip provided in an embodiment of the present disclosure.

### DETAILED DESCRIPTION

Embodiments of the present disclosure provide a communication method, a terminal, a network device, and a communication system.

In a first aspect, an embodiment of the present disclosure provides a communication method. The method includes: in response to a condition corresponding to an event being satisfied, sending, by a terminal, first information to a network device, where the first information is used to determine a first QCL parameter.

In the above embodiment, by sending the first information in a case that an event is triggered, the first QCL parameter in this case is determined based on the content of the first information. This allows for clarifying the first QCL parameter that will be switched to or adjusted to.

In conjunction with some embodiments of the first aspect, in some embodiments, the event is used to trigger at least one of: reporting a reference signal resource identity for a Transmission Configuration Indicator TCI state, wherein the first QCL parameter is a QCL parameter corresponding to the reference signal resource identity; reporting a reference signal resource identity for a downlink TCI state, wherein the first QCL parameter is a QCL parameter corresponding to the reference signal resource identity; reporting for an uplink TCI state, wherein the first QCL parameter is a QCL parameter corresponding to the reference signal resource identity; reporting for a joint TCI state, wherein the first QCL parameter is a QCL parameter corresponding to the reference signal resource identity; reporting for a TCI state of a neighboring cell, wherein the first QCL parameter is a QCL parameter corresponding to the reference signal resource identity.

In the above embodiment, based on this, the specific trigger event for sending the first information can be clearly identified, and a relationship between trigger time and a corresponding trigger condition can be established, thereby making the trigger condition for sending the first information clearer.

In conjunction with some embodiments of the first aspect, in some embodiments, the condition includes a first condition, the first condition includes a satisfaction condition of a first parameter, and the first parameter includes at least one of: Layer 1 Reference Signal Received Power L1-RSRP; Layer 1 Signal to Interference plus Noise Ratio L1-SINR.

In the above embodiment, the trigger constraint for the first condition is clearly defined, thereby making the trigger condition for sending the first information clearer.

In conjunction with some embodiments of the first aspect, in some embodiments, the condition includes a second condition, the second condition includes a satisfaction condition of an uplink power parameter, and the uplink power parameter includes at least one of: a Power Headroom Report (PHR); a power backoff value.

In the above embodiment, the trigger constraint for the second condition is clearly defined, thereby making the trigger condition for sending the first information clearer.

In conjunction with some embodiments of the first aspect, in some embodiments, the condition includes a third condition, and the third condition includes a first condition and/or a second condition. The first condition includes a satisfaction condition of a first parameter, and the first parameter includes at least one of: Layer 1 Reference Signal Received Power L1-RSRP; Layer 1 Signal to Interference plus Noise Ratio L1-SINR. The second condition includes a satisfaction condition of an uplink power parameter, and the uplink power parameter includes at least one of: a Power Headroom Report PHR; a power backoff value.

In the above embodiment, the triggering constraint for the third condition is clearly defined, thereby making the trigger condition for sending the first information clearer.

In conjunction with some embodiments of the first aspect, in some embodiments, the first condition includes at least one of: a value of the first parameter corresponding to a reference signal resource corresponding to a current QCL parameter being less than a first threshold; a value of the first parameter corresponding to a reference signal resource corresponding to a candidate QCL parameter being greater than a second threshold; a first difference being greater than a first difference threshold, wherein the first difference is a difference between the value of the first parameter corresponding to the reference signal resource corresponding to the candidate QCL parameter and the value of the first parameter corresponding to the reference signal resource corresponding to the current QCL parameter; there being at least one reference signal resource that is different between a first reference signal resource set and a second reference signal resource set, wherein the first reference signal resource set includes reference signal resources corresponding to current K best QCL parameters, and the second reference signal resource set includes reference signal resources corresponding to K best QCL parameters in a last report; a first reference signal resource set not including a QCL parameter included in a TCI state most recently indicated by the network device, wherein the first reference signal resource set includes reference signal resources corresponding to current K best QCL parameters.

In the above embodiment, the specific constraint for the first condition is clarified, thereby making the trigger condition for sending the first information clearer.

In conjunction with some embodiments of the first aspect, in some embodiments, the second condition includes at least one of: a value of a Power Headroom Report PHR of a reference signal resource corresponding to a current QCL parameter being less than a third threshold; the power backoff value caused by a Maximum Permitted Exposure MPE being greater than a fourth threshold, wherein MPE is a MPE corresponding to the reference signal resource corresponding to the current QCL parameter; a value of a PHR corresponding to a candidate reference signal resource being greater than a fifth threshold; the power backoff value corresponding to the candidate reference signal resource being less than a sixth threshold; a second difference being less than a second difference threshold, wherein the second difference is a difference between the power backoff value corresponding to the candidate reference signal resource and the power backoff value corresponding to the current QCL parameter; a third difference being greater than a third difference threshold, wherein the third difference is a difference between the PHR corresponding to the candidate reference signal resource and the PHR corresponding to the reference signal resource corresponding to the current QCL parameter.

In the above embodiments, the specific constraint of the second condition is clarified, thereby making the trigger condition for sending the first information clearer.

In conjunction with some embodiments of the first aspect, in some embodiments, the reference signal resource corresponding to the current QCL parameter includes at least one of: the best reference signal resource in the last report; a reference signal resource corresponding to a TCI state indicated by the network device; all reference signal resources in the last report; a reference signal resource with the worst quality in the last report, wherein the TCI state indicated by the network device includes at least one of: a joint TCI state, a downlink TCI state, and an uplink TCI state.

In conjunction with some embodiments of the first aspect, in some embodiments, the candidate reference signal resource includes at least one of: a non-best reference signal resource in the last report; a reference signal resource other than reference signal resource(s) included in the last report; a reference signal resource other than reference signal resource(s) corresponding to a TCI state indicated by the network device, wherein the TCI state indicated by the network device includes at least one of: a joint TCI state, a downlink TCI state, and an uplink TCI state.

In conjunction with some embodiments of the first aspect, in some embodiments, the condition corresponding to the event includes at least one of: a first condition corresponding to an even for triggering reporting corresponding to a TCI state; a third condition corresponding to an event for triggering reporting corresponding to a TCI state; a first condition corresponding to an event for triggering reporting corresponding to a downlink TCI state; a second condition corresponding to an event for triggering reporting corresponding to an uplink TCI state; a third condition corresponding to an event for triggering reporting corresponding to an uplink TCI state; a third condition corresponding to an event for triggering reporting corresponding to a TCI state of a neighboring cell.

In the above embodiment, an association relationship between an event and a corresponding trigger condition is clarified, thereby making the trigger condition for sending the first information clearer.

In a second aspect, an embodiment of the present disclosure provides a communication method. The method includes: receiving, by a network device, first information sent from a terminal in a case that a condition corresponding to an event is satisfied, where the first information is used to determine a first QCL parameter.

In the above embodiment, the network device obtains the information for determining the first QCL parameter, thereby enabling the determination of the first QCL parameter.

In conjunction with some embodiments of the second aspect, in some embodiments, the event is used to trigger at least one of: reporting a reference signal resource identity for a Transmission Configuration Indicator TCI state, wherein the first QCL parameter is a QCL parameter corresponding to the reference signal resource identity; reporting a reference signal resource identity for a downlink TCI state, wherein the first QCL parameter is a QCL parameter corresponding to the reference signal resource identity; reporting for an uplink TCI state, wherein the first QCL parameter is a QCL parameter corresponding to the reference signal resource identity; reporting for a joint TCI state, wherein the first QCL parameter is a QCL parameter corresponding to the reference signal resource identity; reporting for TCI state of a neighboring cell, wherein the first QCL parameter is a QCL parameter corresponding to the reference signal resource identity.

In conjunction with some embodiments of the second aspect, in some embodiments, the condition includes a first condition, the first condition includes a satisfaction condition of a first parameter, and the first parameter includes at least one of: Layer 1 Reference Signal Received Power L1-RSRP; Layer 1 Signal to Interference plus Noise Ratio L1-SINR.

In conjunction with some embodiments of the second aspect, in some embodiments, the condition includes a second condition, the second condition includes a satisfaction condition of an uplink power parameter, and the uplink power parameter includes at least one of: a Power Headroom Report PHR; a power backoff value (P-MPR).

In conjunction with some embodiments of the second aspect, in some embodiments, the condition includes a third condition, and the third condition includes a first condition and/or a second condition. The first condition includes a satisfaction condition of a first parameter, and the first parameter includes at least one of: Layer 1 Reference Signal Received Power L1-RSRP; Layer 1 Signal to Interference plus Noise Ratio L1-SINR. The second condition includes a satisfaction condition of an uplink power parameter, and the uplink power parameter includes at least one of: a Power Headroom Report PHR; a power backoff value.

In conjunction with some embodiments of the second aspect, in some embodiments, the first condition includes at least one of: a value of the first parameter corresponding to a reference signal resource corresponding to a current QCL parameter being less than a first threshold; a value of the first parameter corresponding to a reference signal resource corresponding to a candidate QCL parameter being greater than a second threshold; a first difference being greater than a first difference threshold, wherein the first difference is a difference between the value of the first parameter corresponding to the reference signal resource corresponding to the candidate QCL parameter and the value of the first parameter corresponding to the reference signal resource corresponding to the current QCL parameter; there being at least one reference signal resource that is different between a first reference signal resource set and a second reference signal resource set, wherein the first reference signal resource set includes reference signal resources corresponding to current K best QCL parameters, and the second reference signal resource set includes reference signal resources corresponding to K best QCL parameters in a last report; a first reference signal resource set not including a QCL parameter included in a TCI state most recently indicated by the network device, wherein the first reference signal resource set includes reference signal resources corresponding to the current K best QCL parameters.

In conjunction with some embodiments of the second aspect, in some embodiments, the second condition includes at least one of: a value of the Power Headroom Report PHR of a reference signal resource corresponding to a current QCL parameter being less than a third threshold; the power backoff value caused by a Maximum Permitted Exposure MPE being greater than a fourth threshold, wherein the MPE is a MPE corresponding to the reference signal resource corresponding to the current QCL parameter; a value of PHR corresponding to a candidate reference signal resource being greater than a fifth threshold; the power backoff value corresponding to the candidate reference signal resource being less than a sixth threshold; a second difference being less than a second difference threshold, wherein the second difference is a difference between the power backoff value corresponding to the candidate reference signal resource and the power backoff value corresponding to the current QCL parameter; a third difference being greater than a third difference threshold, wherein the third difference is a difference between the PHR corresponding to the candidate reference signal resource and the PHR corresponding to the reference signal resource corresponding to the current QCL parameter.

In conjunction with some embodiments of the second aspect, in some embodiments, the reference signal resource corresponding to the current QCL parameter includes at least one of: a best reference signal resource reported by the terminal in the last report; a reference signal resource corresponding to a TCI state indicated by the network device;
all reference signal resources reported by the terminal in the last report; a reference signal resource with the worst quality reported by the terminal in the last report; wherein the TCI state indicated by the network device includes at least one of: a joint TCI state, a downlink TCI state and an uplink TCI state.

In conjunction with some embodiments of the second aspect, in some embodiments, the candidate reference signal resource includes at least one of: a non-best reference signal resource reported by the terminal in the last report; a reference signal resource other than reference signal resource(s) included in the last report reported by the terminal; a reference signal resource other than reference signal resource(s) corresponding to the TCI state indicated by the network device, wherein the TCI state indicated by the network device includes at least one of: a joint TCI state, a downlink TCI state, and an uplink TCI state.

In conjunction with some embodiments of the second aspect, in some embodiments, the condition corresponding to the event includes at least one of: a first condition corresponding to an event for triggering reporting corresponding to a TCI state; a third condition corresponding to an event for triggering reporting corresponding to a TCI state; a first condition corresponding to an event for triggering reporting corresponding to a downlink TCI state; a second condition corresponding to an event for triggering reporting corresponding to an uplink TCI state; a third condition corresponding to an event for triggering reporting corresponding to an uplink TCI state; a third condition corresponding to an event for triggering reporting corresponding to a TCI state of a neighboring cell.

In a third aspect, an embodiment of the present disclosure provides a communication method. The method includes: in response to a condition corresponding to an event being satisfied, sending, by a terminal, first information to a network device, wherein the first information is used to determine a first QCL parameter; and receiving, by the network device, the first information.

In a fourth aspect, an embodiment of the present disclosure provides a terminal. The terminal includes: a transceiving module configured to send first information to a network device in response to a condition corresponding to an event being satisfied, wherein the first information is used to determine a first QCL parameter.

In a fifth aspect, an embodiment of the present disclosure provides a network device. The network device includes: a transceiving module configured to receive first information sent from a terminal in a case that a condition corresponding to an event is satisfied, wherein the first information is used to determine a first QCL parameter.

In a sixth aspect, an embodiment of the present disclosure provides a terminal. The terminal includes: one or more processors; wherein the processors are configured to execute the communication method of the first aspect.

In a seventh aspect, an embodiment of the present disclosure provides a network device. The network device includes: one or more processors; wherein the processors are configured to execute the communication method of the second aspect.

In an eighth aspect, an embodiment of the present disclosure provides a communication system. The system includes: a terminal and a network device, wherein the terminal is configured to implement the communication method of the first aspect, and the network device is configured to implement the communication method of the second aspect.

In a ninth aspect, an embodiment of the present disclosure provides a storage medium storing instructions. When the instructions are run on a communication device, the communication device is caused to perform the communication method according to either the first or second aspect.

It can be understood that the aforementioned terminal, access network device, first network element, second network element, core network device, communication system, storage medium, program product, computer program, chip or chip system are all used to perform the methods provided in the embodiments of the present disclosure. Therefore, for the beneficial effects that can be achieved, reference can be made to the beneficial effects in the corresponding methods, which will not be repeated here.

The embodiments of the present disclosure provide a communication method, a terminal, a network device and a system. In some embodiments, "communication method" can be used interchangeably with the terms such as "information processing method", "data processing method", etc. The "communication apparatus" can be used interchangeably with terms such as "information processing apparatus", "data processing apparatus", etc. The terms "information processing system" and "communication system", etc., can be used interchangeably.

The embodiments of the present disclosure are not exhaustive, but are merely illustrative of some embodiments, and are not intended to be a specific limitation on the protection scope of the present disclosure. In the case of no contradiction, each step in a certain embodiment can be implemented as an independent embodiment, and the steps can be arbitrarily combined. For example, a solution obtained from removing some steps from a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined. For example, some or all steps of different embodiments can be arbitrarily combined, and a certain embodiment can be arbitrarily combined with the optional implementations of other embodiments.

In the respective embodiments of the present disclosure, unless otherwise specified or provided for by logic, the terms and/or descriptions between the embodiments are consistent and can be referenced by each other. The technical features in different embodiments can be combined to form a new embodiment based on their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "foregoing", "this", etc., may mean "one and only one", or "one or more", "at least one", etc. For example, when articles such as "a", "an", or "the", etc., in English are used in translation, the noun following the article may be understood as a singular expression form or a plural expression form.

In the embodiments of the present disclosure, "a plurality of" refers to two or more.

In some embodiments, the terms such as "at least one of", "one or more", "a plurality of", "multiple", etc., may be used interchangeably.

In the embodiments of the present disclosure, descriptions such as "at least one of A or B", "A and/or B", "in one case, A, and in another case, B", or "in response to one case, A, and in response to another case, B", etc., can include the following technical solutions depending on the situation: in some embodiments, A (executing A independently of B); in some embodiments, B (executing B independently of A); in some embodiments, selecting from A and B and executing (A and B being selectively executed); and in some embodiments, A and B (executing both A and B). The same applies when there are more branches, such as A, B, and C, etc.

In some embodiments, descriptions such as "A or B", etc. may include the following technical solutions depending on the situation: in some embodiments, A (executing A independently of B); in some embodiments, B (executing B independently of A); and in some embodiments, selecting from A and B and executing (A and B being selectively executed). The same applies when there are more branches such as A, B, and C, etc.

The prefixes "first" and "second" in some embodiments of the present disclosure are merely used to distinguish between different description objects and do not constitute any restriction on the position, order, priority, quantity, or content of the description objects. For the statement of the description object, please refer to the description in the context of the claims or embodiments, and no unnecessary restriction should be constituted due to the use of the prefixes. For example, if the description object is a "field", the ordinal number before the "field" in the "first field" and the "second field" does not limit the position or order between the "fields". "First" and "second" do not limit whether the "fields" modified by them are in the same message or not, nor do they limit the order of the "first field" and the "second field". For another example, if the description object is a "level", the ordinal number before the "level" in the "first level" and the "second level" does not limit the priority between the "levels". For another example, the number of the description objects is not limited by the ordinal number and can be one or more. Taking "first apparatus" as an example, the number of "apparatuses" can be one or more. In addition, the objects modified by different prefixes can be the same or different. For example, if the description object is "apparatus", then the "first apparatus" and the "second apparatus" can be the same apparatus or different apparatuses, and their types can be the same or different; for another example, if the description object is "information", then the "first information" and the "second information" can be the same information or different information, and their contents can be the same or different.

In some embodiments, "including A", "containing A", "for indicating A", and "carrying A" can be interpreted as directly carrying A or indirectly indicating A.

In some embodiment, terms such as "time/frequency", "time/frequency domain", etc., refer to a time domain and/or a frequency domain.

In some embodiments, the terms such as "in response to...", "in response to determining...", "in the case of...", "when...", "at the time of...", "if...", "provided ...", etc., can be used interchangeably.

In some embodiments, the terms such as "greater than", "greater than or equal to", "not less than", "more than", "more than or equal to", "not less than", "higher than", "higher than or equal to", "not lower than", "above", etc. can be used interchangeably, and terms such as "less than", "less than or equal to", "not greater than", "less than", "less than or equal to", "not more than", "lower than", "lower than or equal to", "not higher than", "below", etc. can be used interchangeably.

In some embodiments, the apparatus and so on can be interpreted as physical or virtual, and its name is not limited to the name described in the embodiments. Terms such as "apparatus", "equipment", "device", "circuit", "network element", "node", "function", "unit", "section", "system", "network", "chip", "chip system", "entity", "subject", or the like, can be used interchangeably.

In some embodiments, "network" can be interpreted as an apparatus included in the network (such as an access network device, a core network device, etc.)

In some embodiments, terms such as "access network device (AN device)", "radio access network device (RAN device)", "base station (BS)", "radio base station", "fixed station", "node", "access point", "transmission point (TP)", "reception point (RP)", "transmission and/or reception point (transmission/reception point, TRP)", "panel", "antenna panel", "antenna array", "cell", "macro cell", "small cell", "femto cell", "pico cell" "sector", "cell group", "serving cell", "carrier", "component carrier", "bandwidth part (BWP)", or the like, can be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or the like, can be used interchangeably.

In some embodiments, the access network device, the core network device, or the network device may be replaced by a terminal. For example, embodiments of the present disclosure may also be applied to a structure where communications between the access network device, the core network device, or the network device and a terminal is replaced by communications between multiple terminals (e.g., device-to-device (D2D), vehicle-to-everything (V2X), etc.). In this case, a structure in which a terminal has all or part of functions of the access network device may be set. Furthermore, terms such as "uplink", "downlink", etc., may be replaced with terms corresponding to communications between terminals (e.g., "side", "sidelink"). For example, an uplink channel, a downlink channel, etc., may be replaced with a sidelink channel, and an uplink, a downlink, etc., may be replaced with a sidelink.

In some embodiments, the terminal may be replaced by an access network device, a core network device, or a network device. In this case, a structure in which the access network device, the core network device, or the network device may have all or a part of the functions of the terminal may be set.

In some embodiments, obtaining data, information, etc. may comply with the laws and regulations of the country where the obtaining is performed.

In some embodiments, data, information, etc., may be obtained with the user's consent.

Furthermore, each element, each row, or each column in the table of the embodiments of the present disclosure can be implemented as an independent embodiment, and a combination of any element, any row, or any column can also be implemented as an independent embodiment.

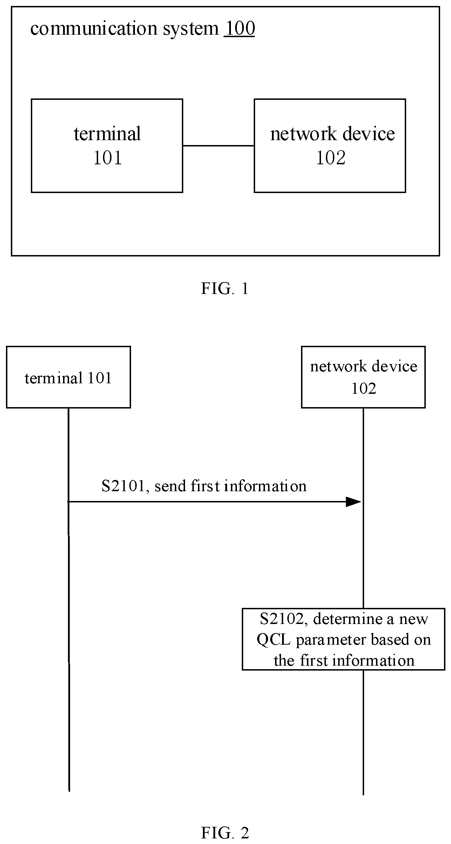

FIG. 1 is a schematic diagram of the architecture of a communication system according to an embodiment of the present disclosure.

As shown in FIG. 1, a communication system 100 includes a terminal 101 and a network device 102.

In some embodiments, the terminal 101 includes, but is not limited to, at least one of the following: a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home.

In some embodiments, the network device 102 may include at least one of an access network device and a core network device.

In some embodiments, the access network device may be, for example, a node or device that enables a terminal to access a wireless network. The access network device may include, but is not limited to, at least one of the following: an evolved Node B (eNB) in a 5G communication system, a next-generation evolved Node B (next generation eNB, ng-eNB), a next-generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (cloud RAN), a base station in other communication systems, or an access node in a Wi-Fi system.

In some embodiments, the technical solutions of the present disclosure can be applicable to the Open RAN architecture. In this case, the interfaces between access network devices or interfaces within an access network device involved in the embodiments of the present disclosure can be changed into internal interfaces of the Open RAN, and the processes and information interactions between these internal interfaces can be implemented through software or programs.

In some embodiments, the access network device may be formed of a central unit (CU) and a distributed unit (DU), where the CU may also be referred to as a control unit. The CU-DU structure may be used to separate the protocol layers of the access network device, with some functions of the protocol layers being placed in and centrally controlled by the CU and some or all of the remaining functions of the protocol layers being distributed in the DU and centrally controlled by the CU, but it is not limited thereto.

In some embodiments, the core network device may be a single device including one or more network elements, or it may be multiple devices or a cluster of devices, including all or part of the aforementioned one or more network elements. The network elements may be virtual or physical. The core network may include, for example, at least one of: an Evolved Packet Core (EPC), a 5G Core Network (5GCN), a Next Generation Core (NGC).

It can be understood that the communication system described in the embodiments of the present disclosure is for the purpose of more clearly illustrating the technical solutions of the present disclosure, and does not constitute a limitation on the technical solutions provided in the present disclosure. As those skilled in the art will know, with the evolution of system architecture and the emergence of new business scenarios, the technical solutions provided in the embodiments of the present disclosure are also applicable to similar technical problems.

The following embodiments of the present disclosure can be applied to the communication system 100 shown in FIG. 1, or to some of the subjects, but are not limited thereto. The subjects shown in FIG. 1 are illustrative. The communication system may include all or some of the subjects in FIG. 1, or it may include subjects other than those of FIG. 1. The number and configuration of the subjects are arbitrary, the subjects can be physical or virtual, and the connection relationship between the subjects is illustrative. The subjects may not be connected or may be connected, and the connection can be in any way, which may be a direct connection or an indirect connection, a wired connection or a wireless connection.

Embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), Public Land Mobile Network (PLMN) networks, Device-to-Device (D2D) systems, Machine-to-Machine (M2M) systems, Internet of Things (IoT) systems, Vehicle-to-Everything (V2X), systems utilizing other communication methods, next-generation systems built upon them, or the like. Furthermore, a combination of multiple systems (e.g., a combination of LTE or LTE-A with 5G) can be applied.

In New Radio (NR), especially in frequency range 2, high-frequency channels attenuate rapidly, and thus beam-based transmission and reception are required to ensure coverage.

In discussions of R15 or R16, beam indication signaling includes Media Access Control Control Element (MAC CE) and Downlink Control Information (DCI).

In some embodiments, the beams of a Physical Downlink Control Channel (PDCCH) and a Physical Uplink Control Channel (PUCCH) are indicated by MAC CE, and a Physical Downlink Shared Channel (PUSCH) and a Physical Uplink Shared Channel (PUSCH) are indicated by DCI.

In some embodiments, the MAC CE or DCI is also used to indicate other reference signals, including, for example: a Channel State Information (CSI) Reference Signal (CSI-RS), a Sounding Reference Signal (SRS), or a Tracking Reference Signal (TRS), etc. Furthermore, the beam of each channel or reference signal is independently indicated.

In discussions of R17, a concept of a common beam (unified TCI state) was proposed. The common beam refers to that multiple channels or reference signals use the same beam. For example, a beam indication signaling is used to indicate a common beam for multiple channels or reference signals.

In some embodiments, a beam report is based on a base station configuration or based on triggering. However, a terminal is the first to know whether a beam update is required via measurement(s). In this case, if a network device configures periodic beam reporting, a configured period that is too short will result in multiple consecutive beam reports containing no update, increasing signaling overhead for beam reporting; a configured period that is too long will result in delayed report transmission when beam information is updated, increasing latency.

In some embodiments, in order to reduce the signaling overhead and latency of beam reporting, a beam reporting method initiated by the terminal based on event triggering is proposed.

However, the specific condition that needs to be satisfied for a beam report initiated by the terminal, and a trigger event corresponding to the condition, are not clearly defined.

Based on this, an embodiment of the present disclosure provides a communication method that enables a terminal and a network device to determine a first QCL parameter based on report content. This reduces the overhead of beam indication signaling and also reduces beam update latency.

FIG. 2 is a schematic diagram showing interactions of a communication method according to an embodiment of the present disclosure. As shown in FIG. 2, the embodiment of the present disclosure relates to a communication method, which includes:
**In step S2101**, the terminal 101 sends first information to the network device 102.

In some embodiments, the network device 102 receives the first information.

In some embodiments, the first information is used to determine a first QCL parameter.

In some embodiments, the first information is used for the network device 102 to determine the first QCL parameter.

In some embodiments, the first information is used for the terminal 101 to determine the first QCL parameter.

In some embodiments, "get", "obtain", "acquire", "receive", "transmission", "bidirectional transmission", "send and/or receive" may be used interchangeably and may be interpreted as receiving from other entity(entities), obtaining from a protocol, obtaining from higher layer, obtaining through self-processing, or autonomous implementation, etc.

In some embodiments, terms such as "send", "transmit", "report", "deliver", "transmission", "bidirectional transmission", "send and/or receive", etc., may be used interchangeably.

In some embodiments, terms such as "certain", "preseted", "preset", "set", "indicated", "a certain", "any", "first", etc., may be used interchangeably. Terms such as "certain A", "predetermined A", "preset A", "set A", "indicated A", "a certain A", "any A", "first A", etc., may be interpreted as A pre-specified in a protocol or the like, or may be interpreted as A obtained through setting, configuration or indication, or may be interpreted as specific A, a certain A, any A, or first A, etc., but the present disclosure does not limit this.

In some embodiments, the names of information, etc., are not limited to the names described in the embodiments. Terms such as "information", "message", "signal", "signaling", "report", "configuration", "indication", "instruction", "command", "channel", "parameter", "domain", "field", "symbol", "code element (symbol)", "codebook", "codeword", "codepoint", "bit", "data", "program", "chip", etc., can be used interchangeably.

In some embodiments, a new beam may be understood as distinct from a current beam. For example, if the terminal 101 finds that the quality of the current beam is poor based on a measurement result of the current beam and determines that beam switching is about to be performed, a target beam to be used for the beam switching may be referred to as a new beam.

In some embodiments, the first QCL parameter may be understood as a new beam.

In some embodiments, the beam includes at least one of: a spatial reception parameter (spatial Rx parameter), Quasi-co-location (QCL) type D, spatial setting, spatial reception filter, spatial transmission filter, spatial domain filter, Transmission Configuration Indicator state (TCI state), joint Transmission Configuration Indicator state (joint TCI state), downlink Transmission Configuration Indicator state (Downlink TCI state, DL TCI state), uplink Transmission Configuration Indicator state (Uplink TCI state, DL TCI state), independent Transmission Configuration Indicator state (unified TCI state), common Transmission Configuration Indicator state (common TCI state), and spatial relation information, etc. The beam may be replaced with any of the above.

In some embodiments, the QCL parameter includes QCL type D: spatial reception parameter.

It can be understood that the beam may be replaced with the QCL parameter.

In some embodiments, the QCL parameter may be referred to as a QCL assumption.

It can be understood that the beam may be replaced by the QCL assumption.

In some embodiments, the QCL parameter further includes type A, type B, and type C, where type A, type B and type C include at least one of average delay, delay spread, doppler shift, doppler spread.

It can be understood that the beam may also be replaced with any of the types A, B, and C.

It can be understood that by defining the above-mentioned new beam type, the terminal 101 can determine a corresponding type of new beam in different communication scenarios.

It should be noted that the embodiments of the present disclosure use the QCL parameter to provide an example description of the beam.

In some embodiments, "QCL parameter", "reference signal corresponding to QCL parameter" and "reference signal resource" may be interchanged.

It can be understood that the first information is used to determine the first QCL parameter. This includes, for example, determining the content included in the first information and determining the corresponding first QCL parameter based on the content in the first information.

In some embodiments, in a case that a condition corresponding to an event is satisfied, the terminal 101 sends the first information to the network device 102.

Based on this, it should be understood that, in a case that specific content included in the event and the specific content of the condition corresponding to the event are known, the terminal 101 may determine what case (e.g., in a case that the specific trigger event satisfies a corresponding trigger condition) the terminal 101 can send the first information to the network device 102.

In some embodiments, the event includes an event corresponding to triggering the reporting of a TCI state.

Optionally, the event is used to trigger at least one of: reporting a reference signal resource identity for a Transmission Configuration Indicator TCI state, wherein the first QCL parameter is a QCL parameter corresponding to the reference signal resource identity; reporting a reference signal resource identity for a downlink TCI state, wherein the first QCL parameter is a QCL parameter corresponding to the reference signal resource identity; reporting for an uplink TCI state, wherein the first QCL parameter is a QCL parameter corresponding to the reference signal resource identity; reporting for a joint TCI state, wherein the first QCL parameter is a QCL parameter corresponding to the reference signal resource identity; reporting for a TCI state of a neighboring cell, wherein the first QCL parameter is a QCL parameter corresponding to the reference signal resource identity. It can be understood that, the TCI state including the first QCL parameter also includes: a downlink TCI state including the first QCL parameter, or an uplink TCI state including the first QCL parameter, or a joint TCI state including the first QCL parameter, or a neighboring cell TCI state including the first QCL parameter.

In some embodiments, if the event corresponds to an event for reporting for a downlink TCI state, a configuration corresponding the reference signal resource identity is a reference signal resource identity indicated for the downlink TCI state.

In some embodiments, if the event corresponds to an event for reporting for an uplink TCI state, a configuration corresponding to the reference signal resource identity is a reference signal resource identity indicated for the uplink TCI state.

In some embodiments, if the event corresponds to an event for reporting for a joint TCI state, a configuration corresponding to the reference signal resource identity is a reference signal resource identity indicated for the joint TCI state.

In some embodiments, if the event corresponds to an event for reporting for a TCI state of a neighboring cell, a configuration corresponding to the reference signal resource identity is a reference signal resource identity indicated for the TCI state of the neighboring cell.

In some embodiments, each event may correspond to a trigger condition.

Optionally, a condition corresponding to an event include at least one of: a first condition corresponding to an event for triggering reporting corresponding to the TCI state, a third condition corresponding to an event for triggering reporting corresponding to the TCI state, a first condition corresponding to an event for triggering reporting corresponding to the downlink TCI state, a second condition corresponding to an event for triggering reporting corresponding to the uplink TCI state, a third condition corresponding to an event for triggering reporting corresponding to the uplink TCI state, a third condition corresponding to an event for triggering reporting corresponding to the TCI state of a neighboring cell.

Therefore, it can be known that the condition(s) for triggering event(s) include the following:
- A) first condition;
- B) second condition;
- C) third condition.

It can be understood that each event has a correspondence relationship with a trigger condition. Therefore, by using the correspondence relationship, it can be determined whether an event satisfies its corresponding condition, and it can be further determined whether the terminal 101 should send the first information to the network device 102.

In some embodiments, for -A) first condition, whether the first condition is satisfied may be determined by determining whether the first parameter satisfies a condition corresponding to the first parameter.

For example, the determination includes that in a case that the first parameter satisfies the condition corresponding to the first parameter, the first condition may be considered to be satisfied (or triggered). In a case that the first parameter does not satisfy the condition corresponding to the first parameter, the first condition may be considered not satisfied (or not triggered).

Optionally, the first parameter includes at least one of: Layer 1 Reference Signal Received Power (layer reference signal received power, L1-RSRP), and/or Layer 1 Signal to Interference plus Noise Ratio (layer signal-to-noise and interference ratio, L1-SINR).

In some embodiments, the -A) first condition is satisfied in a case that at least one of the following conditions exists:
- A1) a value of the first parameter corresponding to a reference signal resource corresponding to a current QCL parameter is less than a first threshold;
- A2) a value of the first parameter corresponding to a reference signal resource corresponding to a candidate QCL parameter is greater than a second threshold.
- A3) a first difference is greater than a first difference threshold, wherein the first difference is a difference between the value of the first parameter corresponding to the reference signal resource corresponding to the candidate QCL parameter and the value of the first parameter corresponding to the reference signal resource corresponding to the current QCL parameter.
- A4) there is at least one reference signal resource that is different between a first reference signal resource set and a second reference signal resource set. The first reference signal resource set includes reference signal resources corresponding to current K best QCL parameters, and the second reference signal resource set includes reference signal resources corresponding to last reported K best QCL parameters.
- A5) a first reference signal resource set does not include a QCL parameter included in a TCI state most recently indicated by network device 102. The first reference signal resource set includes reference signal resources corresponding to current K best QCL parameters.

Optionally, for -A1), for example, the L1-RSRP corresponding to the reference signal resource corresponding to the current QCL parameter is less than a corresponding RSRP threshold, and -A) is satisfied; or, the L1-SINR corresponding to the reference signal resource corresponding to the current QCL parameter is less than a corresponding SINR threshold, and -A) is satisfied.

Optionally, for -A2), for example, the L1-RSRP corresponding to the reference signal resource corresponding to the candidate QCL parameter is greater than a corresponding RSRP threshold, and -A) is satisfied; or, the L1-SINR corresponding to the reference signal resource corresponding to the candidate QCL parameter is greater than a corresponding SINR threshold, and -A) is satisfied.

Optionally, for -A3), for example, the difference between the L1-RSRP value corresponding to the reference signal resource corresponding to the candidate QCL parameter and the L1-RSRP value corresponding to the reference signal resource corresponding to the current QCL parameter is greater than a corresponding difference threshold, and -A) is satisfied; or the difference between the L1-SINR value corresponding to the reference signal resource corresponding to the candidate QCL parameter and the L1-SINR value corresponding to the reference signal resource corresponding to the current QCL parameter is greater than a corresponding difference threshold, and -A) is satisfied.

Optionally, for -A4), for example, there is a reference signal resource corresponding to at least one QCL parameter that is different between reference signal resources corresponding to the current K best QCL parameters and the reference signal resources corresponding to the K best QCL parameters reported last time, -A); or, they are completely different, and -A) is satisfied.

Optionally, for -A5), for example, the reference signal resources corresponding to the current K best QCL parameters are not the QCL parameters included in the TCI state indicated by network device 102, and -A) is satisfied.

It should be noted that the current QCL parameter includes at least one of: the best QCL parameter in the last report; the QCL parameter(s) corresponding to the TCI state most recently indicated by network device 102; all QCL parameters in the last report; the worst QCL parameter in the last report. The TCI state indicated by network device 102 includes at least one of: a joint TCI state, a downlink TCI state, and an uplink TCI state.

It should also be noted that candidate QCL parameter includes at least one of: a non-best QCL parameter in the last report; QCL parameter(s) other than the QCL parameter(s) included in the last report; QCL parameter(s) other than the QCL parameter(s) corresponding to the TCI state most recently indicated by network device 102. The TCI state indicated by network device 102 includes at least one of: a joint TCI state, a downlink TCI state, and an uplink TCI state.

It should also be noted that if a certain candidate QCL parameter satisfies a certain trigger condition, it is determined as the first QCL parameter, and the terminal device indicates the reference signal resource identity corresponding to the first QCL parameter to the network device through the first information.

It should also be noted that the last report includes the most recent first information that has been sent. The first information may be understood as a beam report, including an explicit beam report and an implicit beam report, used to inform network devices of a reference signal resource identity corresponding to a new beam.

In some embodiments, for -B) second condition, whether the second condition is satisfied may be determined by determining whether the second parameter satisfies a condition corresponding to the second parameter.

For example, the determination includes that in a case that the second parameter satisfies the condition corresponding to the second parameter, the second condition may be considered to be satisfied (or triggered). In a case that the second parameter does not satisfy the condition corresponding to the second parameter, the second condition may be considered not satisfied (or not triggered).

Optionally, the second parameter may be an uplink power parameter.

Optionally, in a case that the second parameter is an uplink power parameter, the second parameter includes: a Power Headroom Report (PHR), and/or a power backoff value.

In some embodiments, the -B) second condition is satisfied in a case that at least one of the following conditions exists:
- B1) a Power Headroom Report PHR value of a reference signal resource corresponding to a current QCL parameter is less than a third threshold;
- B2) a power backoff value caused by the Maximum Permitted Exposure (MPE) is greater than a fourth threshold; where the MPE is a MPE corresponding to the reference signal resource corresponding to the current QCL parameter;
- B3) the PHR value corresponding to a candidate reference signal resource is greater than a fifth threshold;
- B4) the power backoff value corresponding to the candidate reference signal resource is less than a sixth threshold;
- B5) a second difference is less than a second difference threshold, where the second difference is a difference between the power backoff value corresponding to the candidate reference signal resource and the power backoff value corresponding to the current QCL parameter;
- B6) a third difference is greater than a third difference threshold, where the third difference is the difference between the PHR corresponding to the candidate reference signal resource and the PHR corresponding to the reference signal resource corresponding to the current QCL parameter.

It is understood that the content represented by the reference signal resource corresponding to the current QCL parameter can be found in the relevant example description in -A), which will not be repeated here.

It can be understood that -B) is satisfied in a case that -B3) and -B4) indicate that the uplink power parameter of the QCL parameter corresponding to the current uplink TCI state is not good (does not satisfy a threshold requirement).

It can be understood that -B) is satisfied in a case that -B3) and -B4) indicate that the uplink power parameter corresponding to the candidate reference signal resource is good (satisfies a threshold requirement).

It can be understood that -B) is satisfied in a case that -B5) and -B6) indicate that the uplink power parameter of the candidate reference signal is better than the uplink power parameter corresponding to the current TCI state (satisfies a threshold requirement).

It can be understood that the power backoff value corresponding to the current QCL parameter is the power backoff value corresponding to the reference signal resource corresponding to the current QCL parameter.

It should be noted that candidate reference signal resources include at least one of: a non-best reference signal resource in the last report; reference signal resource(s) other than reference signal resource(s) included in the last report; reference signal resource(s) other than reference signal resource(s) corresponding to the TCI state indicated by network device 102. The TCI state indicated by network device 102 includes at least one of: a joint TCI state, a downlink TCI state, and an uplink TCI state. A candidate reference signal resource is a reference signal resource corresponding to a candidate QCL parameter.

It should also be noted that if a certain reference signal resource satisfies a certain trigger condition, it is determined as a first reference signal resource corresponding to the first QCL parameter, and the terminal device indicates the reference signal resource identity corresponding to the first reference signal resource to the network device through the first information.

It should also be noted that the last report includes the most recent first information that has been sent. The first information may be understood as a beam report, including an explicit beam report and an implicit beam report, used to inform network devices of a reference signal resource identity corresponding to a new beam.

In some embodiments, for the -B) second condition, whether the second condition is satisfied may also be determined by determining whether the first parameter satisfies the condition corresponding to the first parameter.

For example, in a case that the first parameter satisfies the condition corresponding to the first parameter, the second condition may be considered to be satisfied (or triggered). In a case that the first parameter does not satisfy the condition corresponding to the first parameter, the second condition may be considered not satisfied (or not triggered).

In some embodiments, the -B) second condition is satisfied in a case that at least one of the following conditions exists:
- B6) the value of the first parameter corresponding to the current uplink TCI state is less than a corresponding threshold, where the current uplink TCI state corresponds to a downlink reference signal resource;
- B7) the value of the first parameter of the source downlink reference signal resource of the QCL parameter corresponding to the reference signal resource of the current uplink TCI state is less than a corresponding threshold, where the current uplink TCI state corresponds to an uplink reference signal resource.

Optionally, for -B6), the value(s) of L1-RSRP and/or L1-SINR corresponding to the current uplink TCI state is(are) less than respective thresholds, and -B) is satisfied.

Optionally, for -B7), the value(s) of L1-RSRP and/or L1-SINR of the source downlink reference signal resource of the QCL parameter corresponding to the reference signal resource of the current uplink TCI state is(are) less than respective thresholds, and -B) is satisfied.

In some embodiments, for the -C) third condition, whether -C) is satisfied may be determined by determining whether the first condition and/or the second condition is(are) satisfied.

For example, the determination includes that -C) is satisfied in a case that the first condition and/or the second condition is(are) satisfied. The -C) is not satisfied in a case that neither the first nor the second condition is satisfied. That is, for an event that triggers reporting of a joint TCI state, it may not be implemented by a separate definition, but is jointly defined using the first and second conditions.

It can be understood that the above descriptions provide detailed explanations regarding the satisfaction of both -A) first condition and -B) second condition. Therefore, for information regarding whether -A) first condition and/or -B) second condition in -C) are satisfied, reference can be made to the relevant descriptions in the above embodiments, and repeated descriptions will be omitted here.

In some embodiments, for -C) third condition, the condition definition for the joint TCI state may also be implemented by defining the third condition separately.

For example, the first parameter corresponding to the reference signal resource corresponding to a candidate QCL parameter is higher than a corresponding threshold, and an uplink power parameter corresponding to the reference signal resource corresponding to the candidate QCL parameter satisfies a threshold requirement, and -C is satisfied.

It can be understood that the reference signal resource corresponding to the candidate QCL parameter and the candidate reference signal resource have been explained in the above embodiments, and will not be repeated here.

In some embodiments, the first information may be carried in second information (e.g., information for random access).

In some embodiments, the terminal 101 sends the first information by sending the information for random access to the network device 102.

In some embodiments, the second information may include, for example, type A information (Message A) or type 1 information (Message 1).

Optionally, Message A includes Message 1 and corresponding PUSCH.

For example, the network device 102 configures a correspondence relationship between CSI-RS, a random access resource (Random Access Channel Occasion, RO) and a preamble, and/or configures a correspondence relationship between SSB(s), RO(s) and preamble(s). After the terminal 101 determines the CSI-RS or SSB corresponding to the first QCL parameter, the terminal 101 sends the random access preamble to the network device 102 via Message A or Message 1 based on a corresponding RO.

In some embodiments, in a case that the second information is the information for random access, a corresponding random access procedure includes at least one of:
contention-free random access or contention-based random access.

It can be understood that RO may include a time-domain resource and a frequency-domain resource. In a case that the RO and preamble are dedicated, the random access corresponding to the second information is contention-free random access. In a case that the RO and preamble are shared with other terminal(s), the random access corresponding to the second information is contention-based random access.

In some embodiments, the first information is carried in a Scheduling Request (SR).

In some examples, an SR resource (time-frequency resource(s) and sequence(s)) has a first mapping relationship with CSI-RS (which may be a one-to-one relationship or a one-to-many relationship).

In some embodiments, an SR resource (time-frequency resource(s) and sequence(s)) has a first mapping relationship with SSB (which may be a one-to-one relationship or a one-to-many relationship).

Based on this, the network device 102 may determine the corresponding SSB or CSI-RS based on the SR, and further determine the corresponding first QCL parameter based on the SSB or CSI-RS.

In some embodiments, the first information is carried in the SR and an uplink shared channel media access control control element (Physical Downlink Shared Channel Media Access Control, PUSCH MAC CE).

Optionally, the PUSCH MAC CE may include the first information, while the SR is used to initiate a scheduling request, requesting the network device 102 to configure PUSCH resource(s).

In some embodiments, the first information is carried in configured grant PUSCH, dynamic scheduling (dynamic grant) PUSCH, or PUCCH.

Optionally, the terminal 101 carries the first information based on the obtained configured grant PUSCH resource(s), the dynamic scheduling (dynamic grant) PUSCH or PUCCH resource(s) configured by the network device 102.

In some embodiments, the terms such as "up", "uplink", "physical uplink", etc., may be used interchangeably. The terms such as "down", "downlink", "physical downlink", etc., may be used interchangeably. The terms such as "side", "sidelink", "side communication", "sidelink communication", "direct connection", "direct link", "direct communication", "direct link communication", etc., may be used interchangeably.

In some embodiments, the terms such as "Downlink Control Information (DCI)", "downlink (DL) assignment", "DL DCI", "uplink (UL) grant", "UL DCI", etc., may be used interchangeably.

In some embodiments, terms such as "Physical Downlink Shared Channel (PDSCH)", "DL data", etc., may be used interchangeably. Terms such as "Physical Uplink Shared Channel (PUSCH)", "UL data", etc., may be used interchangeably.

In some embodiments, terms such as "radio", "wireless", "Radio Access Network (RAN)", "Access Network (AN)", "RAN-based", etc., may be used interchangeably.

In some embodiments, terms such as "Synchronization Signal (SS)", "Synchronization Signal Block (SSB)", "Reference Signal (RS)", "pilot", "pilot signal", etc., may be used interchangeably.

In some embodiments, terms such as "precoding", "precoder", "weight", "precoding weight", "Quasi-Co-Location (QCL)", "Transmission Configuration Indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel", etc., may be used interchangeably.

**In step S2102**, the network device 102 determines the first QCL parameter based on the first information.

In some embodiments, in a case that the first information is carried in the second information and sent to the network device 102,
the network device 102 determines the corresponding SSB and/or CSI-RS based on the received preamble and/or the corresponding RO, and further determines the first QCL parameter of the corresponding SSB and/or CSI-RS.

In some embodiments, in a case that the first information is carried in the SR, after the network device 102 obtains the SR, the network device 102 determines the corresponding SSB and/or CSI-RS based on the first mapping relationship or the second mapping relationship, and further determines the first QCL parameter of the corresponding SSB and/or CSI-RS.

The communication method involved in the embodiments of the present disclosure may include at least one of steps S2101 to S2102. For example, step S2101 may be implemented as an independent embodiment, step S2102 may be implemented as an independent embodiment, or step S2101 + step S2102 may be implemented as an independent embodiment, and the present disclosure is not limited to this.

In some embodiments, the order of steps S2101 and S2102 may be exchanged or steps S2101 and S2102 may be performed simultaneously.

In some embodiments, step S2102 is optional, and one or more of these steps may be omitted or substituted in different embodiments.

In some embodiments, step S2101 is optional, and one or more of these steps may be omitted or substituted in different embodiments.

In some embodiments, other optional implementations described before or after the specification corresponding to FIG. 2 may be referred to.

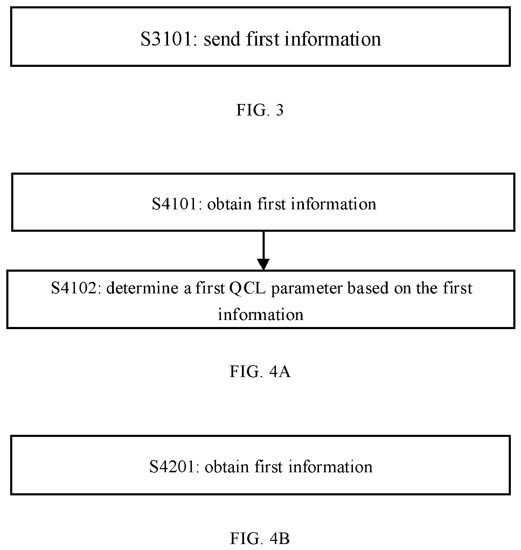

FIG. 3 is a schematic flowchart of a communication method according to an embodiment of the present disclosure. As shown in FIG. 3, the embodiment of the present disclosure relates to a communication method, which includes:
**In step S3101**, the first information is sent.

Regarding the optional implementations of step S3101, reference can be made to the optional implementations of step S2101 in FIG. 2 and other related parts in the embodiments involved in FIG. 2, and repeated descriptions will be omitted here.

In some embodiments, in response to a condition corresponding to an event being satisfied, the first information is sent to the network device 102. The first information is used to determine a first QCL parameter.

In some embodiments, the event is used to trigger at least one of: reporting a reference signal resource identity for a Transmission Configuration Indicator TCI state, wherein the first QCL parameter is a QCL parameter corresponding to the reference signal resource identity; reporting a reference signal resource identity for a downlink TCI state, wherein the first QCL parameter is a QCL parameter corresponding to the reference signal resource identity; reporting for an uplink TCI state, wherein the first QCL parameter is a QCL parameter corresponding to the reference signal resource identity; reporting for a joint TCI state, wherein the first QCL parameter is a QCL parameter corresponding to the reference signal resource identity; reporting for a TCI state of a neighboring cell, wherein the first QCL parameter is a QCL parameter corresponding to the reference signal resource identity. In some embodiments, the condition includes a first condition, the first condition includes a satisfaction condition of a first parameter, and the first parameter includes: L1-RSRP, and/or L1-SINR.

In some embodiments, the condition includes a second condition, the second condition includes a satisfaction condition of an uplink power parameter, and the uplink power parameter includes: PHR, and/or a power backoff value.

In some embodiments, the condition includes a third condition which includes a first condition and/or a second condition. The first condition includes a satisfaction condition of a first parameter, and the first parameter includes at least one of: L1-RSRP, L1-SINR; the second condition includes a satisfaction condition of an uplink power parameter, and the uplink power parameter includes at least one of: PHR; a power backoff value.

In some embodiments, the first condition includes at least one of: a value of the first parameter corresponding to a reference signal resource corresponding to a current QCL parameter being less than a first threshold; a value of the first parameter corresponding to a reference signal resource corresponding to the candidate QCL parameter being greater than a second threshold; a first difference being greater than a first difference threshold, wherein the first difference is a difference between the value of the first parameter corresponding to the reference signal resource corresponding to the candidate QCL parameter and the value of the first parameter corresponding to the reference signal resource corresponding to the current QCL parameter; a first reference signal resource set being different from a second reference signal resource set in at least one reference signal resource, where the first reference signal resource set includes reference signal resources corresponding to current K best QCL parameters, and the second reference signal resource set includes reference signal resources corresponding to last reported K best QCL parameters; a first reference signal resource set not including the QCL parameter(s) included in a TCI state most recently indicated by the network device, where the first reference signal resource set includes reference signal resources corresponding to the current K best QCL parameters.

In some embodiments, the second condition includes at least one of: a value of a Power Headroom Report PHR of the reference signal resource corresponding to the current QCL parameter being less than a third threshold; a power backoff value caused by MPE being greater than a fourth threshold, where MPE is the MPE corresponding to the reference signal resource corresponding to the current QCL parameter; a value of a PHR corresponding to a candidate reference signal resource being greater than a fifth threshold; a power backoff value corresponding to a candidate reference signal resource being less than a sixth threshold; a second difference being less than a second difference threshold, wherein the second difference is a difference between the power backoff value corresponding to the candidate reference signal resource and the power backoff value corresponding to the current QCL parameter; a third difference being greater than a third difference threshold, wherein the third difference is a difference between the PHR corresponding to the candidate reference signal resource and the PHR corresponding to the reference signal resource corresponding to the current QCL parameter.

In some embodiments, the reference signal resource corresponding to the current QCL parameter includes at least one of: the best reference signal resource in the last report; a reference signal resource corresponding to a TCI state indicated by the network device; all reference signal resources in the last report; a reference signal resource with the worst quality in the last report; where the TCI state indicated by the network device includes at least one of: a joint TCI state, a downlink TCI state, and an uplink TCI state.

In some embodiments, a candidate reference signal resource includes at least one of: a non-best reference signal resource in the last report; a reference signal resource other than the reference signal resource(s) included in the last report; a reference signal resource other than the reference signal resource(s) corresponding to the TCI state indicated by the network device. The TCI state indicated by the network device includes at least one of: a joint TCI state, a downlink TCI state, and an uplink TCI state.

In some embodiments, the condition corresponding to an event includes at least one of: a first condition corresponding to an event for triggering reporting corresponding to a TCI state; a third condition corresponding to an event for triggering reporting corresponding to a TCI state; a first condition corresponding to an event for triggering reporting corresponding to a downlink TCI state; a second condition corresponding to an event for triggering reporting corresponding to an uplink TCI state; a third condition corresponding to an event for triggering reporting corresponding to an uplink TCI state; a third condition corresponding to an event for triggering reporting corresponding to a TCI state of a neighboring cell.

FIG. 4A is a schematic flowchart of a communication method according to an embodiment of the present disclosure. As shown in FIG. 4A, the embodiment of the present disclosure relates to a communication method, which includes:
**In step S4101**, the first information is obtained.

Regarding the optional implementations of step S4101, reference can be made to the optional implementations of step S2101 in FIG. 2 and other related parts in the embodiments involved in FIG 2, and repeated descriptions will be omitted here.

In some embodiments, the network device 102 receives the first information sent by the terminal 101. But, the present disclosure is not limited to this, and the network device 102 may also receive the first information sent by other entity(entities).

In some embodiments, the network device 102 obtains the first information as defined in a protocol.

In some embodiments, the network device 102 obtains the first information from upper layer(s).

In some embodiments, the network device 102 performs processing to obtain the first information.

In some embodiments, step S3101 is omitted, and the network device 102 autonomously implements the function indicated by the first information, or the above function is by default or as a default.

In some embodiments, the terminal 101 sends the first information to the network device 102. But, the present disclosure is not limited to this, and the terminal 101 may also send the first information to other entity(entities).

**In step S4102**, the first QCL parameter is determined based on the first information.

Regarding the optional implementations of step S4102, reference can be made to the optional implementations of step S2102 in FIG. 2 and other related parts in the embodiments involved in FIG. 2, and repeated descriptions will be omitted here.

The communication method involved in the embodiments of the present disclosure may include at least one of steps S4101 to S4102. For example, step S4101 may be implemented as an independent embodiment, step S4102 may be implemented as an independent embodiment, or step S4 101 + step S4 102 may be implemented as an independent embodiment, but the present disclosure is not limited to this.

In some embodiments, the order of steps S4101 and S4102 may be exchanged or steps S4101 and S4102 may be performed simultaneously.

In some embodiments, step S4102 is optional, and one or more of these steps may be omitted or substituted in different embodiments.

In some embodiments, step S4101 is optional, and one or more of these steps may be omitted or substituted in different embodiments.

FIG. 4B is a schematic flowchart of a communication method according to an embodiment of the present disclosure. As shown in FIG. 4B, the embodiment of present disclosure relates to a communication method, which includes:
**In step S4201**, the first information is obtained.

Regarding the optional implementations of step S4201, reference can be made to optional implementations of step S2101 in FIG. 2, step S3101 in FIG. 3, and step S4101 in FIG. 4A, as well as other related parts in the embodiments involved in FIGs. 2, 3 and 4A, and repeated description will be omitted here.

In some embodiments, the network device 102 receives the first information sent by the terminal 101 in a case that a condition corresponding to an event is satisfied, and the first information is used to determine the first QCL parameter.

In some embodiments, the event is used to trigger at least one of: reporting a reference signal resource identity for a Transmission Configuration Indicator TCI state, wherein the first QCL parameter is a QCL parameter corresponding to the reference signal resource identity; reporting a reference signal resource identity for a downlink TCI state, wherein the first QCL parameter is a QCL parameter corresponding to the reference signal resource identity; reporting for an uplink TCI state, wherein the first QCL parameter is a QCL parameter corresponding to the reference signal resource identity; reporting for a joint TCI state, wherein the first QCL parameter is a QCL parameter corresponding to the reference signal resource identity; reporting for a TCI state of a neighboring cell, wherein the first QCL parameter is a QCL parameter corresponding to the reference signal resource identity.

In some embodiments, the condition includes a first condition, the first condition includes a satisfaction condition of a first parameter, and the first parameter including: L1-RSRP, and/or L1-SINR.

In some embodiments, the condition includes a second condition, the second condition includes a satisfaction condition of an uplink power parameter, and the uplink power parameter includes: PHR, and/or a power backoff value.

In some embodiments, the condition includes a third condition, and the third condition includes a first condition and/or a second condition. The first condition includes a satisfaction condition of a first parameter, and the first parameter includes at least one of: L1-RSRP, L1-SINR; the second condition includes a satisfaction condition of an uplink power parameter, and the uplink power parameter includes at least one of: PHR; a power backoff value.

In some embodiments, the first condition includes at least one of: a value of the first parameter corresponding to a reference signal resource corresponding to a current QCL parameter being less than a first threshold; the value of the first parameter corresponding to a reference signal resource corresponding to a candidate QCL parameter being greater than a second threshold; a first difference being greater than a first difference threshold, wherein the first difference is a difference between the value of the first parameter corresponding to the reference signal resource corresponding to the candidate QCL parameter and the value of the first parameter corresponding to the reference signal resource corresponding to the current QCL parameter; a first reference signal resource set being different from a second reference signal resource set in at least one reference signal resource, where the first reference signal resource set includes the reference signal resources corresponding to current K best QCL parameters, and the second reference signal resource set includes reference signal resources corresponding to K best QCL parameters in the last report; a first reference signal resource set not including the QCL parameter(s) included in a TCI state recently indicated by the network device, where the first reference signal resource set includes reference signal resources corresponding to current K best QCL parameters.

In some embodiments, the second condition includes at least one of: a value of a Power Headroom Report PHR of the reference signal resource corresponding to the current QCL parameter being less than a third threshold; a power backoff value caused by MPE being greater than a fourth threshold, where MPE is the MPE corresponding to the reference signal resource corresponding to the current QCL parameter; a value of PHR corresponding to a candidate reference signal resource being greater than a fifth threshold; a power backoff value corresponding to the candidate reference signal resource being less than a sixth threshold; a second difference being less than a second difference threshold, wherein the second difference is a difference between the power backoff value corresponding to the candidate reference signal resource and the power backoff value corresponding to the current QCL parameter; a third difference being greater than a third difference threshold, wherein the third difference is a difference between the PHR corresponding to the candidate reference signal resource and the PHR corresponding to the reference signal resource corresponding to the current QCL parameter.

In some embodiments, the reference signal resource corresponding to the current QCL parameter includes at least one of: the best reference signal resource in the last report; a reference signal resource corresponding to the TCI state indicated by the network device; all reference signal resources in the last report; a reference signal resource with the worst quality in the last report; where the TCI state indicated by the network device includes at least one of: a joint TCI state, a downlink TCI state, and an uplink TCI state.

In some embodiments, a candidate reference signal resource includes at least one of: a non-best reference signal resource in the last report; a reference signal resource other than the reference signal resource(s) included in the last report; a reference signal resource other than the reference signal resource(s) corresponding to the TCI state indicated by the network device. The TCI state indicated by the network device includes at least one of: a joint TCI state, a downlink TCI state, and an uplink TCI state.

In some embodiments, the condition corresponding to an event includes at least one of: a first condition corresponding to an event for triggering reporting corresponding to a TCI state; a third condition corresponding to an event for triggering reporting corresponding to a TCI state; a first condition corresponding to an event for triggering reporting corresponding to a downlink TCI state; a second condition corresponding to an event for triggering reporting corresponding to an uplink TCI state; a third condition corresponding to an event for triggering reporting corresponding to an uplink TCI state; a third condition corresponding to an event for triggering reporting corresponding to a TCI state of a neighboring cell.

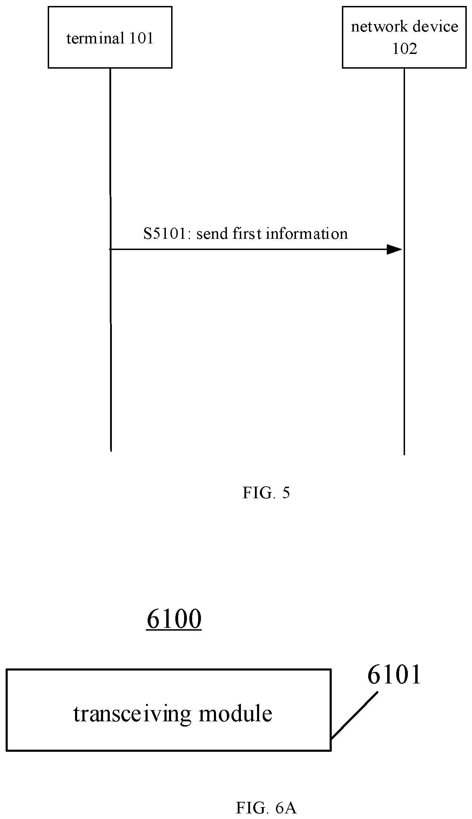

FIG. 5 is a schematic diagram showing an interaction of a communication method according to an embodiment of the present disclosure. As shown in FIG. 5, the embodiment of the present disclosure relate to a communication method, which includes:
**In step S5101**, the terminal 101 sends the first information to the network device 102.

In some embodiments, in response to a condition corresponding to an event being satisfied, the terminal 101 sends the first information to the network device 102. The first information is used to determine the first QCL parameter.

Regarding the optional implementations of step S5101, reference can be made to step S2101 of FIG. 2, step S3101 of FIG. 3, step S4101 of FIG. 4A and step S4201 of FIG. 4B, as well as other related parts in the embodiments involved in FIGs. 2, 3, 4A and 4B, and repeated descriptions will be omitted here.

In some embodiments, the above method may include the methods described in the embodiments of the communication system side, terminal side, access network device side, core network device side, first network element side, second network element side, etc., which will not be repeated here.

An embodiment of the present disclosure provides a communication method that, based on the content of a beam report initiated by a terminal based on event-triggering, enables the terminal and a base station to determine a new beam based on the beam report and begin using the new beam when a certain condition is satisfied. Using this scheme reduces the signaling overhead of beam indication and also reduces the latency of beam update.

In some embodiments, in response to a first condition being satisfied, the terminal sends the first information. The first information is used to determine a new beam.

In some embodiments, optionally, the beam may also be referred to as any of the following: a spatial reception parameter (spatial Rx parameter), Quasi Co-Location (QCL) Type D, spatial setting, spatial reception filter, spatial transmission filter, spatial domain filter, a Transmission Configuration Indicator (TCI) state, a joint Transmission Configuration Indicator state (joint TCI state), a downlink Transmission Configuration Indicator state (Downlink TCI state, DL TCI state), an uplink Transmission Configuration Indicator state (Uplink TCI state, DL TCI state), an independent Transmission Configuration Indicator state (unified TCI state), a common Transmission Configuration Indicator state (common TCI state), and spatial relation information, etc.

In some embodiments, the first condition includes at least one of the following events:
- A) used to trigger reporting of a downlink TCI state;
- B) used to trigger reporting of an uplink TCI state;
- C) used to trigger reporting of a joint TCI state;
- D) used to trigger reporting of a TCI state of a neighboring cell.

In some embodiments, -A) may be defined based on measured L1-SRP, L1-SINR.

Optionally, -A) is defined based on the measured L1-SRP, L1-SINR, including at least one of:
- A1) a current beam L1-RSRP /L1-SINR is lower than a threshold;
- A2) a candidate beam L1-RSRP /L1-SINR is higher than a threshold;
- A3) a candidate beam L1-RSRP/L1-SINR is higher than the current beam by a first threshold (offset);
- A4) there is at least one beam that is different between current K best beams and K best beams in the last report or current K best beams do not include the best beam in the last report, or the K best beams do not include beam(s) most recently indicated by the base station, where K is an integer greater than 0.

Optionally, for -A4), this includes: the optimal beam difference in the two sets is higher than a second threshold.

Optionally, the current beam includes at least one of:
the best beam in the last report;
a beam corresponding to a joint/DL TCI state most recently indicated by the base station;
all beams in the last report;
the worst beam in the last report.

Optionally, the candidate beam includes at least one of:
a non-best beam in the last report;
beam(s) other than beam(s) included in the last report;
beam (s) other than beam(s) corresponding to the joint or downlink TCI state (joint/DL TCI state) most recently indicated by the base station.

In some embodiments, -B) may be defined based on the measured L1-SRP, L1-SINR.

Optionally, -B) is defined based on the measured L1- SRP, L1-SINR, including at least one of:
- B1) The L1-RSRP/L1-SINR of the current beam is lower than a first threshold (in a case that the current UL TCI state corresponds to a downlink reference signal resource).
- B2) The L1-RSRP/L1-SINR of the source downlink reference signal resource of the QCL Type D of the uplink reference signal resource corresponding to the current uplink TCI state is lower than the first threshold (in a case that the current UL TCI state corresponds to an uplink reference signal resource).
- B3) An uplink power parameter corresponding to QCL Type D corresponding to the current uplink TCI state becomes poor (meeting a preset requirement).

For example, the uplink power parameter becoming poor includes at least one of:
a Power Headroom Report (PHR) is lower than a third threshold;
a power backoff value caused by the MPE effect is higher than a fourth threshold (MPE threshold).
   - B4) The L1-RSRP/L1-SINR of a reference signal on a candidate reference signal resource is greater than a second threshold, where the candidate reference signal resource is a reference signal resource measured by the terminal.
   - B5) The uplink power parameter on QCL Type D corresponding to the candidate reference signal resource is good (meeting a preset requirement).

For example, the uplink power parameter being good includes at least one of:
P-MPR is lower than a fifth threshold (e.g., P_MPR_00);
PHR is higher than a sixth threshold.
   - B6) A candidate L1-RSRP/L1-SINR is higher than that of the current uplink TCI state (including the first or second bullet) by more than an offset.
   - B7) The uplink power parameter on QCL Type D corresponding to the candidate reference signal resource is better than the uplink power parameter of the current UL TCI state (meeting a preset requirement).

For example, the uplink power parameter on QCL Type D corresponding to the candidate reference signal resource being better than the uplink power parameter of the current UL TCI state includes at least one of:
the P-MPR of the candidate is lower than that of the current one by an offset;
the PHR of the candidate is higher than that of the current one by an offset.

In some embodiments, -C) may be defined based on at least one of a first condition (event) and/or a second condition. That is, an event for triggering a joint TCI state is not separately defined, but includes at last one of the first event(s) and at least one of the second event(s).

In some embodiments, for -C), a condition for triggering a joint TCI state may be separately defined.

For example, L1-RSRP /L1-SINR of a candidate beam is higher than a threshold, and an uplink power parameter on the QCL Type D corresponding to a candidate reference signal resource is good.

In some embodiments, -C) may be defined based on at least one of a first event, a second event, or a third event.

Optionally, the candidate reference signal resource corresponds to a reference signal resource of an additional cell.

Optionally, the following parameters of the additional cell may be configured independently (e.g., configured to be the same as or different from a serving cell), the parameters including:
a TCI state, a corresponding threshold, and an offset value, etc.

The embodiments of the present disclosure define trigger event(s) for a terminal to perform beam reporting based on event triggering, and clarify the condition(s) under which the terminal triggers beam reporting. Using this scheme reduces the signaling overhead of beam reporting and also reduces beam update latency.

In the embodiments of the present disclosure, some or all of the steps and their optional implementations may be arbitrarily combined with some or all of the steps in other embodiments, or may be arbitrarily combined with optional implementations in other embodiments.

Embodiments of the present disclosure further provide an apparatus for implementing any one of the above methods. For example, an apparatus is provided. The apparatus includes units or modules for implementing the steps performed by the terminal in any one of the above methods. As another example, another apparatus is provided. The apparatus includes units or modules for implementing the steps performed by a network device (e.g., an access network device, a core network function node, a core network device, etc.) in any one of the above methods.

It should be understood that the division of units or modules in the above apparatus is only a logical functional division. In actual implementations, the units or modules may be fully or partially integrated into a physical entity, or the units or modules may be physically separated. Furthermore, the units or modules in the apparatus may be implemented in a form of a processor invoking software. For example, the apparatus includes a processor connected to a memory, and instructions are stored in the memory. The processor invokes the instructions stored in the memory to implement any one of the above methods or to implement the functions of the units or modules in the above apparatus. The processor may be, for example, a general-purpose processor, such as a Central Processing Unit (CPU) or a microprocessor, and the memory may be a memory within the apparatus, or a memory outside the apparatus. Alternatively, the units or modules in the apparatus may be implemented in a form of hardware circuit(s). The functions of a part or all of the units or modules may be implemented through a design of the hardware circuit(s). The hardware circuit(s) may be understood as one or more processors. For example, in an implementation, the hardware circuit is an Application-Specific Integrated Circuit (ASIC), and the functions of a part or all of the units or modules can be implemented through the design of a logical relationship between components within the circuit. For example, in another implementation, the hardware circuit may be implemented using a Programmable Logic Device (PLD), such as a Field-Programmable Gate Array (FPGA), which may include a large number of logic gate circuits. A connection relationship between the logic gate circuits is configured through a configuration file, achieving the functions of a part or all of the units or modules. All units or modules of the apparatus may be implemented entirely through the form of processor invoking software, or may be implemented entirely through the form of hardware circuit(s), or may be implemented partially through the form of processor invoking software, with the remaining part implemented through the form of hardware circuit(s).

In an embodiment of the present disclosure, the processor is a circuit with signal processing capabilities. In an implementation, the processor may be a circuit with instruction read and execution capabilities, such as a Central Processing Unit (CPU), a microprocessor, a Graphics Processing Unit (GPU) (which may be understood as a microprocessor), or a Digital Signal Processor (DSP), etc. In another implementation, the processor may implement certain functions through a logical relationship between hardware circuits. The logical relationship between the hardware circuits is fixed or reconfigurable. For example, the processor is a hardware circuit implemented using an Application-Specific Integrated Circuit (ASIC) or a Programmable Logic Device (PLD), such as an FPGA. In a reconfigurable hardware circuit, a procedure in which the processor loads a configuration file to realize the configuration of the hardware circuit can be understood as a procedure in which the processor loads instructions to implement the functions of a part or all of the above units or modules. Furthermore, it may also be a hardware circuit designed for artificial intelligence, which may be understood as an ASIC, such as a Neural Network Processing Unit (NPU), a Tensor Processing Unit (TPU), or a Deep learning Processing Unit (DPU), etc.

FIG. 6A is a schematic diagram of a structure of a terminal provided in an embodiment of the present disclosure. As shown in FIG. 6A, the terminal 6100 may include a transceiving module 6101. In some embodiments, the transceiving module 6101 is configured to send first information to a network device in response to a condition corresponding to an event is satisfied. The first information is used to determine a first QCL parameter. Optionally, the transceiving module 6101 is used to perform at least one of the communication steps such as sending and/or receiving (such as step S2101, but not limited thereto) performed by the terminal 101 in any of the above methods, which will not be described in detail here.

In some embodiments, in some embodiments, the event is used to trigger at least one of: reporting a reference signal resource identity for a Transmission Configuration Indicator TCI state, wherein the first QCL parameter is a QCL parameter corresponding to the reference signal resource identity; reporting a reference signal resource identity for a downlink TCI state, wherein the first QCL parameter is a QCL parameter corresponding to the reference signal resource identity; reporting for an uplink TCI state, wherein the first QCL parameter is a QCL parameter corresponding to the reference signal resource identity; reporting for a joint TCI state, wherein the first QCL parameter is a QCL parameter corresponding to the reference signal resource identity; reporting for a TCI state of a neighboring cell, wherein the first QCL parameter is a QCL parameter corresponding to the reference signal resource identity.

In some embodiments, the condition includes a first condition, the first condition includes a satisfaction condition of a first parameter, and the first parameter includes: L1-RSRP, and/or L1-SINR.

In some embodiments, the condition includes a second condition, the second condition includes a satisfaction condition of an uplink power parameter, and the uplink power parameter includes: PHR, and/or a power backoff value.

In some embodiments, the condition includes a third condition, and the third condition includes a first condition and/or a second condition. The first condition includes a satisfaction condition of a first parameter, and the first parameter includes at least one of: L1-RSRP, L1-SINR; the second condition includes a satisfaction condition of an uplink power parameter, and the uplink power parameter includes at least one of: PHR; a power backoff value.

In some embodiments, the first condition includes at least one of: a value of the first parameter corresponding to a reference signal resource corresponding to a current QCL parameter being less than a first threshold; the value of the first parameter corresponding to a reference signal resource corresponding to a candidate QCL parameter being greater than a second threshold; a first difference being greater than a first difference threshold, wherein the first difference is a difference between the value of the first parameter corresponding to the reference signal resource corresponding to the candidate QCL parameter and the value of the first parameter corresponding to the reference signal resource corresponding to the current QCL parameter; a first reference signal resource set being different from a second reference signal resource set in at least one reference signal resource, where the first reference signal resource set includes reference signal resources corresponding to current K best QCL parameters, and the second reference signal resource set includes reference signal resources corresponding to K best QCL parameters in the last report; a first reference signal resource set not including QCL parameter(s) included in a TCI state recently indicated by the network device, where the first reference signal resource set includes reference signal resources corresponding to the current K best QCL parameters.

In some embodiments, the second condition includes at least one of: a value of a Power Headroom Report PHR of a reference signal resource corresponding to a current QCL parameter being less than a third threshold; a power backoff value caused by MPE being greater than a fourth threshold, where MPE is the MPE corresponding to the reference signal resource corresponding to the current QCL parameter; a value of PHR corresponding to a candidate reference signal resource being greater than a fifth threshold; a power backoff value corresponding to the candidate reference signal resource being less than a sixth threshold; a second difference being less than a second difference threshold, wherein the second difference is a difference between the power backoff value corresponding to the candidate reference signal resource and the power backoff value corresponding to the current QCL parameter; a third difference being greater than a third difference threshold, wherein the third difference is a difference between the PHR corresponding to the candidate reference signal resource and the PHR corresponding to the reference signal resource corresponding to the current QCL parameter.

In some embodiments, the reference signal resource corresponding to the current QCL parameter includes at least one of: the best reference signal resource in the last report; a reference signal resource corresponding to the TCI state indicated by the network device; all reference signal resources in the last report; a reference signal resource with the worst quality in the last report; where the TCI state indicated by the network device includes at least one of: a joint TCI state, a downlink TCI state, and an uplink TCI state.

In some embodiments, a candidate reference signal resource includes at least one of: a non-best reference signal resource in the last report; reference signal resource(s) other than reference signal resource(s) included in the last report; reference signal resource(s) other than reference signal resource(s) corresponding to the TCI state indicated by the network device. The TCI state indicated by the network device includes at least one of: a joint TCI state, a downlink TCI state, and an uplink TCI state.

In some embodiments, the condition corresponding to the event includes at least one of: a first condition corresponding to an event for triggering reporting corresponding to a TCI state; a third condition corresponding to an event for triggering reporting corresponding to a TCI state; a first condition corresponding to an event for triggering reporting corresponding to a downlink TCI state; a second condition corresponding to an event for triggering reporting corresponding to an uplink TCI state; a third condition corresponding to an event for triggering reporting corresponding to an uplink TCI state; a third condition corresponding to an event for triggering reporting corresponding to a TCI state of a neighboring cell.

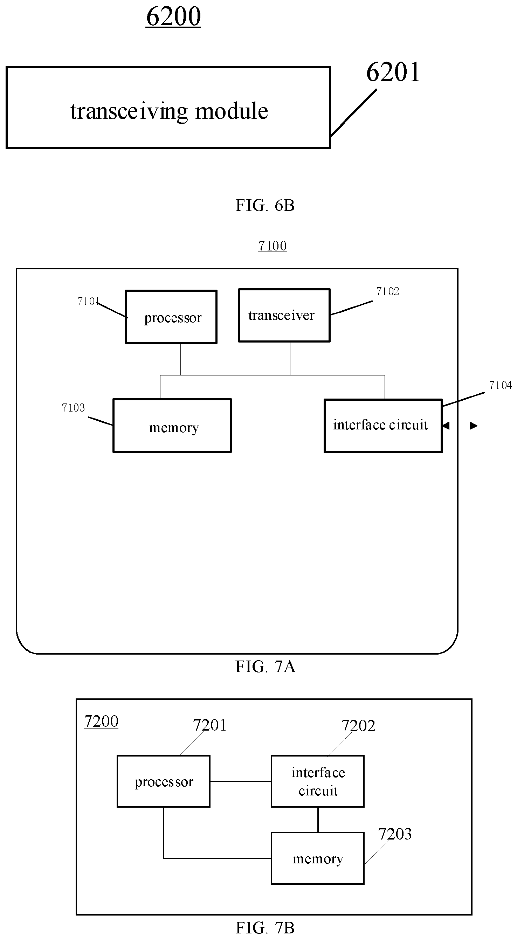

FIG. 6B is a schematic diagram of a structure of a network device provided in an embodiment of the present disclosure. As shown in FIG. 6B, the network device 6200 may include a transceiving module 6201. In some embodiments, the transceiving module 6201 is configured to receive first information sent by a terminal in a case that a condition corresponding to an event is satisfied. The first information is used to determine a first QCL parameter. Optionally, the transceiving module 6201 is used to perform at least one of the communication steps such as sending and/or receiving (such as step S2101, but not limited thereto) performed by the network device 102 in any of the above methods, which will not be described in detail here.

In some embodiments, the event is used to trigger at least one of: reporting a reference signal resource identity for a Transmission Configuration Indicator TCI state, wherein the first QCL parameter is a QCL parameter corresponding to the reference signal resource identity; reporting a reference signal resource identity for a downlink TCI state, wherein the first QCL parameter is a QCL parameter corresponding to the reference signal resource identity; reporting for an uplink TCI state, wherein the first QCL parameter is a QCL parameter corresponding to the reference signal resource identity; reporting for a joint TCI state, wherein the first QCL parameter is a QCL parameter corresponding to the reference signal resource identity; reporting for a TCI state of a neighboring cell, wherein the first QCL parameter is a QCL parameter corresponding to the reference signal resource identity.

In some embodiments, the condition includes a first condition, the first condition includes a satisfaction condition of a first parameter, and the first parameter includes: L1-RSRP, and/or L1-SINR.

In some embodiments, the condition includes a second condition, the second condition includes a satisfaction condition of an uplink power parameter, and the uplink power parameter includes: PHR, and/or a power backoff value.

In some embodiments, the condition includes a third condition, and the third condition includes a first condition and/or a second condition. The first condition includes a satisfaction condition of a first parameter, and the first parameter includes at least one of: L1-RSRP, L1-SINR; the second condition includes a satisfaction condition of an uplink power parameter, and the uplink power parameter includes at least one of: a Power Headroom Report PHR; a power backoff value.

In some embodiments, the first condition includes at least one of: a value of the first parameter corresponding to a reference signal resource corresponding to a current QCL parameter being less than a first threshold; the value of the first parameter corresponding to a reference signal resource corresponding to a candidate QCL parameter being greater than a second threshold; a first difference being greater than a first difference threshold, wherein the first difference is a difference between the value of the first parameter corresponding to the reference signal resource corresponding to the candidate QCL parameter and the value of the first parameter corresponding to the reference signal resource corresponding to the current QCL parameter; a first reference signal resource set being different from a second reference signal resource set in at least one reference signal resource, where the first reference signal resource set includes reference signal resources corresponding to current K best QCL parameters, and the second reference signal resource set includes reference signal resources corresponding to K best QCL parameters in the last report; a first reference signal resource set not including the QCL parameter(s) included in the TCI state most recently indicated by the network device, where the first reference signal resource set includes reference signal resources corresponding to current K best QCL parameters.

In some embodiments, the second condition includes at least one of: a value of a Power Headroom Report PHR of a reference signal resource corresponding to a current QCL parameter being less than a third threshold; a power backoff value caused by MPE being greater than a fourth threshold, where the MPE is the MPE corresponding to the reference signal resource corresponding to the current QCL parameter; a value of PHR corresponding to the candidate reference signal resource being greater than a fifth threshold; a power backoff value corresponding to the candidate reference signal resource being less than a sixth threshold; a second difference being less than a second difference threshold, wherein the second difference is a difference between the power backoff value corresponding to the candidate reference signal resource and the power backoff value corresponding to the current QCL parameter; a third difference being greater than a third difference threshold, wherein the third difference is a difference between the PHR corresponding to the candidate reference signal resource and the PHR corresponding to the reference signal resource corresponding to the current QCL parameter.

In some embodiments, the reference signal resource corresponding to the current QCL parameter includes at least one of: the best reference signal resource in the last report; reference signal resource(s) corresponding to the TCI state indicated by the network device; all reference signal resources in the last report; a reference signal resource with the worst quality in the last report; where the TCI state indicated by the network device includes at least one of: a joint TCI state, a downlink TCI state, and an uplink TCI state.

In some embodiments, the candidate reference signal resource includes at least one of: a non-best reference signal resource in the last report; reference signal resource(s) other than reference signal resource(s) included in the last report; reference signal resource(s) other than reference signal resource(s) corresponding to the TCI state indicated by the network device. The TCI state indicated by the network device includes at least one of: a joint TCI state, a downlink TCI state, and an uplink TCI state.

In some embodiments, the condition corresponding to the event includes at least one of: a first condition corresponding to an event for triggering reporting corresponding to a TCI state; a third condition corresponding to an event for triggering reporting corresponding to a TCI state; a first condition corresponding to an event for triggering reporting corresponding to a downlink TCI state; a second condition corresponding to an event for triggering reporting corresponding to an uplink TCI state; a third condition corresponding to for triggering reporting corresponding to an uplink TCI state; a third condition corresponding to an event for triggering reporting corresponding to a TCI state of a neighboring cell.

In some embodiments, the transceiving module may include a sending module and/or a receiving module, and the sending module and the receiving module may be separate or integrated. Optionally, the transceiving module may be interchangeable with a transceiver.

In some embodiments, the processing module may be a single module or may include multiple sub-modules. Optionally, the multiple sub-modules may each perform all or part of the steps required by the processing module. Optionally, the processing module may be interchangeable with a processor.

FIG. 7A is a schematic diagram of the structure of a communication device 7100 according to an embodiment of the present disclosure. The communication device 7100 may be a network device (e.g., an access network device, a core network device, etc.), or may be a terminal (e.g., user equipment, etc.), or may be a chip, chip system, or processor, etc., that supports the network device in implementing any one of the above methods, or may be a chip, chip system, or processor, etc., that supports the terminal in implementing any one of the above methods. The communication device 7100 may be used to implement the methods described in the above method embodiments; for details, reference may be made to the descriptions in the above method embodiments.

As shown in FIG. 7A, the communication device 7100 includes one or more processors 7101. The processor 7101 may be a general-purpose processor or a dedicated processor, such as a baseband processor or a central processor. The baseband processor may be used to process communication protocols and communication data, and the central processor may be used to control a communication apparatus (e.g., a base station, a baseband chip, a terminal device, a terminal device chip, a DU or a CU, etc.), execute programs, and process program data. Optionally, the communication device 7100 is configured to perform any one of the above methods. Optionally, one or more processors 7101 are configured to invoke instructions to cause the communication device 7100 to perform any one of the above methods.

In some embodiments, the communication device 7100 further includes one or more transceivers 7102. When the communication device 7100 includes one or more transceivers 7102, the transceivers 7102 perform at least one of the communication steps such as sending and/or receiving in the above methods (e.g., step S2102, but not limited thereto), and the processors 7101 perform at least one of other steps (e.g., step S2101, but not limited thereto). In optional embodiments, the transceivers may include a receiver and/or a sender, and the receiver and the sender may be separate or integrated together. Optionally, terms such as "transceiver", "transceiving unit", "transceiving machine", "transceiving circuit", "interface circuit", "interface", etc., can be used interchangeably; terms such as "sender", "sending unit", "sending machine", "sending circuit", etc., can be used interchangeably; and terms such as "receiver", "receiving unit", "receiving machine", "receiving circuit", etc., can be used interchangeably.

In some embodiments, the communication device 7100 further includes one or more memories 7103 for storing data. Optionally, all or part of the memories 7103 may be located outside the communication device 7100. In optional embodiments, the communication device 7100 may include one or more interface circuits 7104. Optionally, the interface circuit(s) 7104 is(are) connected to the memory(memories) 7103 and may be used to receive data from the memory(memories) 7103 or other devices, and may be used to send data to the memory(memories) 7103 or other devices. For example, the interface circuit(s) 7104 may read data stored in the memory(memories) 7103 and send the data to the processor(s) 7101.

The communication device 7100 described in the above embodiments may be a network device or a terminal, but the scope of the communication device 7100 described in the present disclosure is not limited thereto, and the structure of the communication device 7100 may not be limited by FIG. 7A. The communication device may be a standalone device or a part of a larger device. For example, the communication device may be: (1) a standalone integrated circuit IC, or a chip, or a chip system or a subsystem; (2) a collection of one or more ICs, optionally, the IC collection may also include a storage component for storing data or programs; (3) an ASIC, such as a modem; (4) a module that may be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc.; (6) others, etc.

FIG. 7B is a schematic diagram of the structure of a chip 7200 according to an embodiment of the present disclosure. For a case that the communication device 7100 may be a chip or a chip system, reference may be made to the schematic diagram of chip 7200 shown in FIG. 7B, but the present disclosure is not limited to this.

The chip 7200 includes one or more processors 7201. The chip 7200 is configured to perform any one of the methods described above.

In some embodiments, the chip 7200 further includes one or more interface circuits 7202. Optionally, terms such as "interface circuit", "interface", "transceiving pin", etc., can be used interchangeably. In some embodiments, chip 7200 further includes one or more memories 7203 for storing data. Optionally, all or part of the memories 7203 may be located outside of chip 7200. Optionally, interface circuit 7202 is connected to a memory 7203, and the interface circuit 7202 may be used to receive data from the memory 7203 or other devices, and the interface circuit 7202 may be used to send data to the memory 7203 or other devices. For example, the interface circuit 7202 may read data stored in memory 7203 and send the data to processor 7201.

In some embodiments, the interface circuit 7202 performs at least one of the communication steps such as sending and/or receiving in the above methods (e.g., step S2102, but not limited thereto). The interface circuit 7202 performing the communication steps such as sending and/or receiving in the above methods refers to, for example: the interface circuit 7202 performing data interactions between the processor(s) 7201, the chip 7200, the memory(memories) 7203, or the transceiver(s). In some embodiments, the processor(s) 7201 performs(perform) at least one of other steps (e.g., step S2101, but not limited thereto).

The modules and/or devices described in the various embodiments, such as virtual apparatuses, physical apparatuses, chips, etc., may be combined or separated arbitrarily as needed. Optionally, a part or all of steps may also be performed collaboratively by multiple modules and/or devices, which is not limited here.

The present disclosure also proposes a storage medium storing instructions. When the instructions run on the communication device 7100, the communication device 7100 is caused to perform any one of the above methods. Optionally, the storage medium is an electronic storage medium. Optionally, the storage medium is a computer-readable storage medium, but not limited thereto; it may also be a storage medium readable by other devices. Optionally, the storage medium may be a non-transitory storage medium, but not limited thereto; it may also be a transitory storage medium.

The present disclosure also provides a program product. When the program product is executed by the communication device 7100, the communication device 7100 is caused to perform any of the above methods. Optionally, the program product is a computer program product.

The present disclosure also proposes a computer program. When the computer program runs on a computer, the computer is caused to perform any one of the above methods.

## Claims

1. A communication method, wherein the method comprises:
in response to a condition corresponding to an event being satisfied, sending, by a terminal, first information to a network device, wherein the first information is used to determine a first QCL parameter.

2. The method according to claim 1, wherein the event is used to trigger at least one of:
reporting a reference signal resource identity for a Transmission Configuration Indicator TCI state, wherein the first QCL parameter is a QCL parameter corresponding to the reference signal resource identity;
reporting a reference signal resource identity for a downlink TCI state, wherein the first QCL parameter is a QCL parameter corresponding to the reference signal resource identity;
reporting for an uplink TCI state, wherein the first QCL parameter is a QCL parameter corresponding to the reference signal resource identity;
reporting for a joint TCI state, wherein the first QCL parameter is a QCL parameter corresponding to the reference signal resource identity;
reporting for a TCI state of a neighboring cell, wherein the first QCL parameter is a QCL parameter corresponding to the reference signal resource identity.

3. The method according to claim 1 or 2, wherein the condition comprises a first condition, the first condition comprises a satisfaction condition of a first parameter, and the first parameter comprises at least one of:
Layer 1 Reference Signal Received Power L1-RSRP;
Layer 1 Signal to Interference plus Noise Ratio L1-SINR.

4. The method according to claim 1 or 2, wherein the condition comprises a second condition, the second condition comprises a satisfaction condition of an uplink power parameter;
wherein the uplink power parameter comprises at least one of:
a Power Headroom Report PHR;
a power backoff value.

5. The method according to claim 1 or 2, wherein the condition comprises a third condition, and the third condition comprises a first condition and/or a second condition;
wherein the first condition comprises a satisfaction condition of a first parameter, and the first parameter comprises at least one of:
Layer 1 Reference Signal Received Power L1-RSRP;
Layer 1 Signal to Interference plus Noise Ratio L1-SINR;
wherein the second condition comprises a satisfaction condition of an uplink power parameter;
wherein the uplink power parameter comprises at least one of:
a Power Headroom Report PHR;
a power backoff value.

6. The method according to claim 3, wherein the first condition comprises at least one of:
a value of the first parameter corresponding to a reference signal resource corresponding to a current QCL parameter being less than a first threshold;
a value of the first parameter corresponding to a reference signal resource corresponding to a candidate QCL parameter being greater than a second threshold;
a first difference being greater than a first difference threshold, wherein the first difference is a difference between the value of the first parameter corresponding to the reference signal resource corresponding to the candidate QCL parameter and the value of the first parameter corresponding to the reference signal resource corresponding to the current QCL parameter;
a first reference signal resource set being different from a second reference signal resource set in at least one reference signal resource, wherein the first reference signal resource set comprises reference signal resources corresponding to current K best QCL parameters, and the second reference signal resource set comprises reference signal resources corresponding to K best QCL parameters in a last report;
a first reference signal resource set not comprising a QCL parameter comprised in a TCI state most recently indicated by the network device, wherein the first reference signal resource set comprises reference signal resources corresponding to current K best QCL parameters.

7. The method according to claim 4, wherein the second condition comprises at least one of:
a value of the Power Headroom Report PHR of a reference signal resource corresponding to a current QCL parameter being less than a third threshold;
the power backoff value caused by a Maximum Permitted Exposure MPE being greater than a fourth threshold, wherein MPE is a MPE corresponding to the reference signal resource corresponding to the current QCL parameter;
a value of the PHR corresponding to a candidate reference signal resource being greater than a fifth threshold;
the power backoff value corresponding to the candidate reference signal resource being less than a sixth threshold;
a second difference being less than a second difference threshold, wherein the second difference is a difference between the power backoff value corresponding to the candidate reference signal resource and the power backoff value corresponding to the current QCL parameter;
a third difference being greater than a third difference threshold, wherein the third difference is a difference between the PHR corresponding to the candidate reference signal resource and the PHR corresponding to the reference signal resource corresponding to the current QCL parameter.

8. The method according to claim 6, wherein the reference signal resource corresponding to the current QCL parameter comprises at least one of:
a best reference signal resource in a last report;
a reference signal resource corresponding to a TCI state indicated by the network device;
all reference signal resources in the last report;
a reference signal resource with a worst quality in the last report;
wherein the TCI state indicated by the network device comprises at least one of: a joint TCI state, a downlink TCI state, and an uplink TCI state.

9. The method according to any one of claims 6 to 8, wherein the candidate reference signal resource comprises at least one of:
a non-best reference signal resource in a last report;
a reference signal resource other than a reference signal resource comprised in the last report;
a reference signal resource other than a reference signal resource corresponding to a TCI state indicated by the network device, wherein the TCI state indicated by the network device comprises at least one of: a joint TCI state, a downlink TCI state and an uplink TCI state.

10. The method according to any one of claims 2 to 9, wherein the condition corresponding to the event comprises at least one of:
a first condition corresponding to an event for triggering reporting corresponding to a TCI state;
a third condition corresponding to an event for triggering reporting corresponding to a TCI state;
a first condition corresponding to an event for triggering reporting corresponding to a downlink TCI state;
a second condition corresponding to an event for triggering reporting corresponding to an uplink TCI state;
a third condition corresponding to an event for triggering reporting corresponding to the uplink TCI state;
a third condition corresponding to an even for triggering reporting corresponding to a TCI state of a neighboring cell.

11. A communication method, wherein the method comprises:
receiving, by a network device, first information sent from a terminal in a case that a condition corresponding to an event is satisfied, wherein the first information is used to determine a first QCL parameter.

12. The method according to claim 11, wherein the event is used to trigger at least one of:
reporting a reference signal resource identity for a Transmission Configuration Indicator TCI state, wherein the first QCL parameter is a QCL parameter corresponding to the reference signal resource identity;
reporting a reference signal resource identity for a downlink TCI state, wherein the first QCL parameter is a QCL parameter corresponding to the reference signal resource identity;
reporting for an uplink TCI, wherein the first QCL parameter is a QCL parameter corresponding to the reference signal resource identity;
reporting for a joint TCI state, wherein the first QCL parameter is a QCL parameter corresponding to the reference signal resource identity;
reporting for a TCI state of a neighboring cell, wherein the first QCL parameter is a QCL parameter corresponding to the reference signal resource identity.

13. The method according to claim 11 or 12, wherein the condition comprises a first condition, the first condition comprises a satisfaction condition of a first parameter, and the first parameter comprises at least one of:
Layer 1 Reference Signal Received Power L1-RSRP;
Layer 1 Signal to Interference plus Noise Ratio L1-SINR.

14. The method according to claim 11, wherein the condition comprises a second condition, and the second condition comprises a satisfaction condition of an uplink power parameter;
wherein the uplink power parameter comprises at least one of:
a Power Headroom Report PHR;
a power backoff value.

15. The method according to claim 11 or 12, wherein the condition comprises a third condition, and the third condition comprises a first condition and/or a second condition;
wherein the first condition comprises a satisfaction condition of a first parameter, and the first parameter comprises at least one of:
Layer 1 Reference Signal Received Power L1-RSRP;
Layer 1 Signal to Interference plus Noise Ratio L1-SINR;
wherein the second condition comprises a satisfaction condition of an uplink power parameter;
wherein the uplink power parameter comprises at least one of:
a Power Headroom Report PHR;
a power backoff value.

16. The method according to claim 13, wherein the first condition comprises at least one of:
a value of the first parameter corresponding to a reference signal resource corresponding to a current QCL parameter being less than a first threshold;
a value of the first parameter corresponding to a reference signal resource corresponding to a candidate QCL parameter being greater than a second threshold;
a first difference being greater than a first difference threshold, wherein the first difference is a difference between the value of the first parameter corresponding to the reference signal resource corresponding to the candidate QCL parameter and the value of the first parameter corresponding to the reference signal resource corresponding to the current QCL parameter;
a first reference signal resource set being different from a second reference signal resource set in at least one reference signal resource, wherein the first reference signal resource set comprises reference signal resources corresponding to current K best QCL parameters, and the second reference signal resource set comprises reference signal resources corresponding to K best QCL parameters in a last report;
a first reference signal resource set not comprising a QCL parameter comprised in a TCI state most recently indicated by the network device, wherein the first reference signal resource set comprises reference signal resources corresponding to current K best QCL parameters.

17. The method according to claim 14, wherein the second condition comprises at least one of:
a value of the Power Headroom Report PHR of a reference signal resource corresponding to a current QCL parameter being less than a third threshold;
the power backoff value caused by a Maximum Permitted Exposure MPE being greater than a fourth threshold, wherein MPE is a MPE corresponding to the reference signal resource corresponding to the current QCL parameter;
a value of the PHR corresponding to a candidate reference signal resource being greater than a fifth threshold;
the power backoff value corresponding to the candidate reference signal resource being less than a sixth threshold;
a second difference being less than a second difference threshold, wherein the second difference is a difference between the power backoff value corresponding to the candidate reference signal resource and the power backoff value corresponding to the current QCL parameter;
a third difference being greater than a third difference threshold, wherein the third difference is a difference between the PHR corresponding to the candidate reference signal resource and the PHR corresponding to the reference signal resource corresponding to the current QCL parameter.

18. The method according to claim 16, wherein the reference signal resource corresponding to the current QCL parameter comprises at least one of:
a best reference signal resource in a last report by the terminal;
a reference signal resource corresponding to a TCI state indicated by the network device;
all reference signal resources in the last report by the terminal;
a reference signal resource with a worst quality in the last report by the terminal;
wherein the TCI state indicated by the network device comprises at least one of: a joint TCI state, a downlink TCI state, and an uplink TCI state.

19. The method according to any one of claims 16 to 18, wherein the candidate reference signal resource comprises at least one of:
a non-best reference signal resource in a last report by the terminal;
a reference signal resource other than a reference signal resource comprised in the last report by the terminal;
a reference signal resource other than a reference signal resource corresponding to a TCI state indicated by the network device, wherein the TCI state indicated by the network device comprises at least one of: a joint TCI state, a downlink TCI state and an uplink TCI state.

20. The method according to any one of claims 12 to 19, wherein the condition corresponding to the event comprises at least one of:
a first condition corresponding to an event for triggering reporting corresponding to a TCI state;
a third condition corresponding to an event for triggering reporting corresponding to a TCI state;
a first condition corresponding to an event for triggering reporting corresponding to a downlink TCI state;
a second condition corresponding to an event for triggering reporting corresponding to an uplink TCI state;
a third condition corresponding to an event for triggering reporting corresponding to the uplink TCI state;
a third condition corresponding to an even for triggering reporting corresponding to a TCI state of a neighboring cell.

21. A communication method, wherein the method comprises:
in response to a condition corresponding to an event being satisfied, sending, by a terminal, first information to a network device, wherein the first information is used to determine a first QCL parameter; and
receiving, by the network device, the first information.

22. A terminal, wherein the terminal comprises:
a transceiving module configured to send first information to a network device in response to a condition corresponding to an event being satisfied, wherein the first information is used to determine a first QCL parameter.

23. A network device, wherein the network device comprises:
a transceiving module configured to receive first information sent from a terminal in a case that a condition corresponding to an event is satisfied, wherein the first information is used to determine a first QCL parameter.

24. A terminal, wherein the terminal comprises:
one or more processors;
wherein the processors are configured to execute the communication method according to any one of claims 1 to 10.

25. A network device, wherein the network device comprises:
one or more processors;
wherein the processors are configured to execute the communication method according to any one of claims 11 to 20.

26. A communication system, wherein the system comprises a terminal and a network device, the terminal is configured to implement the communication method according to any one of claims 1 to 10, and the network device is configured to implement the communication method according to any one of claims 11 to 20.

27. A storage medium storing instructions, wherein when the instructions are run on a communication device, the communication device is caused to perform the communication method according to any one of claims 1 to 10 or to perform the communication method according to any one of claims 11 to 20.
